# EUROPÄISCHE PATENTSCHRIFT

(11) **EP 1 784 748 B1**
(45) Veröffentlichungstag und Bekanntmachung des Hinweises auf die Patenterteilung: **18.05.2011**
(21) Anmeldenummer: 05792576.0
(22) Anmeldetag: 16.08.2005
(51) Int. Cl.: G06F 17/30

(54) **ABFRAGEEINRICHTUNG FÜR ELEKTRONISCHE ARCHIVSYSTEME SOWIE ELEKTRONISCHE ARCHIVSYSTEME**
INTERROGATION DEVICE FOR ELECTRONIC ARCHIVE SYSTEMS AND ELECTRONIC ARCHIVE SYSTEMS
DISPOSITIF D'INTERROGATION-REPONSE POUR DES SYSTEMES D'ARCHIVES ELECTRONIQUES, ET SYSTEME D'ARCHIVE ELECTRONIQUE

(30) Priorität: 13.08.2004 EP 04019271
(43) Veröffentlichungstag der Anmeldung: 16.05.2007
(73) Patentinhaber: Hapke, Thorsten, 20251 Hamburg (DE)
(72) Erfinder: Hapke, Thorsten, 20251 Hamburg (DE)
(74) Vertreter: Glawe, Delfs, Moll
(86) Internationale Anmeldenummer: PCT/EP2005/008898
(87) Internationale Veröffentlichungsnummer: WO 2006/018286

(56) Entgegenhaltungen:
- EP-A- 1 189 148
- US-A1- 2004 083 211
- US-B1- 6 363 378
- US-B1- 6 581 056

## Beschreibung

Abfrageeinrichtung für elektronische Archivsysteme sowie elektronisches Archivsystem, das eine automatisierte Klassifizierung von Dokumenten ermöglicht.

Die Erfindung betrifft ein elektronisches Archivsystem mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche).

Elektronische Archivsysteme und Verfahren zum Abfragen von elektronischen Archivsystemen erfahren in jüngster Zeit große Aufmerksamkeit. Während Datenbanksysteme, die die Speicherung und Verwaltung großer Mengen strukturierter Daten erlauben, mit relationalen und objektorientierten Datenbanken bereits einen hohen Reifegrad erreicht haben, fehlen für elektronische Archivsysteme, die Wissen (in Form von Texten) aber auch Multimediainhalte im weitesten Sinne enthalten und damit aus Sicht der Datenverarbeitung nur wenig strukturierte Daten verwalten, noch vergleichbare Verfahren zur effizienten Dokumentstrukturierung (-modellierung), Dokumentverwaltung und Dokumentverarbeitung.

Zunächst zeigt sich das Problem im Kontext der konventionellen Textbearbeitung. Dateisysteme - wie beispielsweise auf herkömmlichen Windows PC's - offenbaren bei der Verwaltung größerer Dokumentmengen rasch die Begrenztheit einfacher Dateistrukturen (wie bspw. Ordnerhierarchien). Elektronische Archivsysteme verwenden daher häufig Datenbanken, die über eine automatische formale Erschließung der Dokumente (Generierung von Volltextindizes) und spezielle Suchmodule einen verbesserten Zugriff auf große Dokumentmengen ermöglichen sollen (vgl. oben). Auch das sich rasant entwickelnde Internet gehört in diesen Kontext. Das WorldWideWeb ist ein dezentral organisiertes elektronisches Archivsystem, das für den Nutzer riesige Dokumentmengen verfügbar macht. Die aus offenkundiger Vorbenutzung bekannten Suchmaschinen wie Altavista, Google oder Metacrawler liefern bei einer Abfrage zwar häufig eine große Anzahl von Treffern, deren Relevanz in Bezug auf die gewünschte Information jedoch häufig zu wünschen übrig lässt. Die Trefferlisten müssen von Hand durchgesehen werden, um die wirklich relevanten Dokumente zu ermitteln. Das ist aufwändig und bei großen Treffermengen praktisch nicht mehr durchführbar.

Vor diesem Hintergrund zeichnen sich zwei Entwicklungslinien ab:
Im Kontext der elektronischen Datenverarbeitung bzw. des konventionellen Information Retrievals finden sich verstärkt Ansätze, Abfragen durch weitere relevante Suchwerte, die bspw. aus einer Analyse der Treffermenge der ersten Abfrage gewonnen werden, iterativ zu verfeinern. Ein solches "relevance feedback" beruht also ganz allgemein auf der Idee, relevante Daten aus einer ersten Treffermenge zu extrahieren und sie - über verschiedene Auswertungsschritte - für die weitere Verfeinerung von Abfragen fruchtbar zu machen (vgl. hierzu beispielsweise auch www.vivisimo.com). Dabei entscheidet die richtige technische Spezifikation der Parameter, vor allem bei der Auswahl der Daten, die in die Feedbackschleifen einbezogen werden sollen, wesentlich über die Relevanz des Feedbacks.

Aus dem US Patent No. 6,581,056 B1 "Information Retrieval System Providing Secondary Content Analysis On Collections of Information Objects" von Ramana B. Rao ist bekannt, dass die Analyse der Dokumente einer Treffermenge ("collection of documents") in einem Zwischenschritt explizit einer eigenständigen Einheit ("Secondary Content Analysis (SCA) engine") zugewiesen werden kann. Über die entsprechende Einheit werden zunächst die Dokumente der Treffermenge in ihre formalen Textbausteine zerlegt ("token"), um dann die für eine statistische Auswertung brauchbaren Daten herauszufiltern("filtering"). Mit Hilfe statistischer Verfahren werden die nach dem Filtern verbliebenen Daten (wahlweise mit Bezug auf das Dokument oder die gesamte Treffermenge) ausgewertet und an den Nutzer für eine sukzessive bzw. rekursive Verfeinerung der Abfrage zurückgegeben.

Aus der Patentanmeldung No. US 2004/0083211 A1 "Method and System for Facilitating the Refinement of Data Queries" von Roger Burrowes Bradford ist ein Verfahren bzw. ein System zur iterativen Verfeinerung von Abfragen bekannt, das semantische Analyseverfahren zur Bewertung der Ergebnisse der Feedbackschleifen einbezieht. Bei dem vorgeschlagenen System werden, ausgehend von der ursprünglichen Abfrage des Nutzers, in mehreren Verfahrensschritten Hypothesen für modifizierte Abfragen formuliert, die sowohl Elemente der ursprünglichen Abfrage als auch aus den Dokumenten der Treffermenge extrahierte Daten bzw. Metadaten enthalten. Die semantische Relevanz der Hypothesen wird mittels einer LSI Engine gewichtet. Ziel des Verfahrens ist es, dem Nutzer semantisch relevante Hypothesen für die Verfeinerung von Abfragen anzubieten.

Da die semantische Relevanz von Nutzdaten, bspw. von Texten, aber auch von Musikstücken, von Filmen usw., zunehmend explizit über Metadaten codiert wird, ist es an diesem Punkt wichtig eine zweite Entwicklungslinie einzubeziehen: Im Kontext der elektronischen Datenverarbeitung werden zunehmend Ontologien für eine konsistente Repräsentation der semantischen Bezüge zwischen den Metadaten eingesetzt. Ontologien explizieren, bspw. vor dem Hintergrund syntaktischen Vorgaben von Beschreibungssprachen wie SGML/XML, den semantischen Gehalt von Metadaten.(vgl. in diesem Kontext auch S. Staab, R. Studer "Handbook on Ontologies", Springer 2004,).

Aus der Patentanmeldung EP 1 189 148 A1 "Document Search and Analysing Method and Apparatus" ist bekannt, dass Ontologien den Anwender bei der Organisation von Dokumenten, also im weitesten Sinne bei der Speicherorganisation, als auch bei der Formulierung von Abfragen unterstützen können.

Aus den genannten Dokumenten ergibt sich keine zufriedenstellende Lehre dafür, wie sich Ontologien in elektronischen Archiven effizienter nutzen lassen. In den genannten US-Dokumenten wird die Tiefenstruktur von Datenbanken bzw. elektronischen Archiven ohne expliziten Rückbezug auf Ontologien bzw. auf eine über Ontologien kontrollierte übergeordnete Speicherorganisation analysiert, während in dem EP-Dokument die Potentiale von Ontologien nur an der Oberfläche berührt werden, indem sie lediglich als Mittel zur Gruppierung von Dokumenten bzw. als erweiterter Thesaurus für konventionelle Abfragen eingesetzt werden. Eine Speicherorganisation elektronischer Archive, die auf Ontologien basiert, bietet einen durch konventionelle Ansätze für Archivabfragen kaum nutzbaren semantischen Mehrwert. Es fehlt daher eine Abfrageeinrichtung bzw. ein elektronisches Archivsystem, das die effiziente Nutzung ontologiebasierter Metadaten automatisiert.

Der Erfindung liegt die Aufgabe zugrunde, eine Abfrageeinrichtung für elektronische Archivsysteme bereitzustellen, bei dem die oben genannten Nachteile vermieden oder zumindest verringert sind, und das sich für eine Automatisierung eignet.

Die erfindungsgemäße Lösung liegt in einer Abfrageeinrichtung mit den Merkmalen des unabhängigen Anspruchs. Vorteilhafte Weiterbildungen sind Gegenstand der abhängigen Ansprüche.

Erfindungsgemäß ist weiter ein elektronisches Archivsystem gegeben, mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche). Suchwerte sind vorzugsweise Daten, Metadaten und logische Verknüpfungen derselben. Andere Zugriffsweisen des Suchmoduls auf die Dokumente seien aber nicht ausgeschlossen.

Erfindungsgemäß ist vorgesehen, dass die Recheneinheit bzw. Datenverarbeitungseinheit der Abfrageeinrichtung - zusätzlich zum Suchmodul - ein Spezifikationsmodul und ein Rekursionsmodul umfasst, und dazu ausgebildet ist in zwei Betriebsarten betrieben zu werden, einer ersten für unspezifische Metadaten und einer zweiten für ontologiespezifische Metadaten, wobei das Spezifikationsmodul eine Beobachtungseinheit, welche die mit dem Suchmodul ermittelte Treffermenge übernimmt und die in den Dokumenten einer Treffermenge enthaltenen Metadaten, mittels mindestens ein Prüfkriterium daraufhin überprüft, ob die in den Dokumenten der Treffermenge enthaltenen Metadaten ontologiebasiert sind, und die zugehörigen Ontologien angibt und in einem zweiten Schritt für die Suchanfrage signifikante Ontologien auswählt und abhängig von ausgewählten Ontologien ontologiespezifische Metadaten herausgreift, diese automatisch in der zweiten Betriebsart weiterverarbeitet und die Metadaten als Metadatenmatrix ausgibt, eine Auswertungseinheit enthält, die zur Analyse der Metadatenmatrix mittels eines voreinstellbaren statistischen Verfahrens ausgebildet ist und eine Äusprägungsliste der ontologiespezifischen Metadaten ausgibt und wobei das Rekursionsmodul eine Evaluierungseinheit, die dazu ausgebildet ist, Metadaten aus der Ausprägungsliste als Hypothesen für die Lösung des jeweiligen Suchproblems anzugeben und diese einem Nutzer vorzuschlagen oder Signifikanztests automatisch zu unterziehen, und eine Auswahleinheit umfasst, die dazu ausgebildet ist, die signifikantesten Hypothesen herauszugreifen und als Suchwerte an das Suchmodul zur Wiederholung zu übergeben, bis ein Abbruchsignal angelegt ist.

Die Erfindung beruht auf dem Gedanken die Abfrageeinrichtung für ein elektronisches Archivsystem so zu organisieren, dass die über ein Suchmodul generierten Treffermengen an ein Spezifikationsmodul übergeben werden, das sie automatisch auswertet. Die in einer konventionellen Archivsuche mittels der Suchwerte generierten Treffermengen bilden also nur einen Zwischenschritt, der durch die Übergabe der Treffermenge an das Spezifikationsmodul eine sukzessive Spezifikation der Abfrage induziert.

Um zu garantieren, dass jeweils die Metadaten mit der höchsten semantischen Relevanz für das Suchproblem in die erfindungsgemäß gebildeten Feedbackschleifen einbezogen werden, wird zunächst über die Beobachtungseinheit des Spezifikationsmoduls - mittels des mindestens einem Prüfkriteriums - der Status der Metadaten der ersten Treffermenge bestimmt. Mit Hilfe des mindestens einen Prüfkriteriums werden - soweit vorhanden - die ontologiebasierten Metadaten und die zugehörigen, relevanten Ontologien identifiziert. Die Auswahlbedingungen der für die weitere Abfrage signifikanten Ontologien können voreinstellbar sein, die Auswahl kann aber auch dynamisch bzw. kontextsensitiv durch einen Nutzer oder automatisch erfolgen. (Feedbackschleife A zur Bestimmung der signifikanten Ontologien).

Die Auswahl der signifikanten Ontologien ist Voraussetzung dafür, die Metadaten ontologiespezifisch zu extrahieren, also nur die Metadaten zu extrahieren, die Ausprägungen bestimmter Ontologien sind. Dann wird die Spezifikation automatisch in der Betriebsart für ontologiespezifische Metadaten fortgeführt. Falls keine Ontologie als signifikant ausgewählt wird, wird die Spezifikation in der Betriebsart für unspezifische Metadaten fortgeführt.

Da die Vorzüge der erfindungsgemäßen Abfrageeinrichtung vor allem in einer zweiten Betriebsart für ontologiespezifische Metadaten liegen, fokussieren die folgenden Ausführungen auf diese Betriebsart.

Sind - über die Beobachtungseinheit des Spezifikationsmoduls - ontologiespezifische Metadaten identifiziert, werden diese extrahiert, als Metadatenmatrix ausgegeben und an die Auswertungseinheit des Spezifikationsmoduls übermittelt. Dieses ermittelt - mit Hilfe statistischer Verfahren - eine Ausprägungsliste der Metadaten. Die Ausprägungsliste der ontologiespezifischen Metadaten wird dann vom Rekursionsmodul als eine Heuristik semantisch relevanter Hypothesen für die Lösung des jeweiligen Suchproblems interpretiert und entweder einem Nutzer vorgeschlagen oder die Signifikanz der Hypothesen wird automatisch, mit Hilfe in einer Evaluierungseinheit angelegter Prüfbedingungen, getestet. Signifikante Hypothesen werden - über die Auswahleinheit des Rekursionsmoduls - herausgegriffen und als Suchwerte an das Suchmodul zurück übermittelt bis eine Abbruchbedingung angelegt ist. (Feedbackschleife B zur iterativen Bestimmung signifikanter (ontologiespezifischer) Metadaten für die Abfrage).

Die Abfrage wird vorzugsweise - soweit kein Benutzereingriff erfolgt - über alle Rekursionsschritte in Bezug auf die mit Hilfe der ersten Treffermenge bestimmten Ontologien spezifiziert. Nach Erreichen der Abbruchbedingung greift die Auswahleinheit die - über alle Umläufe - signifikantesten Hypothesen heraus und gibt sie an den Nutzer aus.

Die vorliegende Erfindung gibt die technische Spezifikation einer Abfrageeinrichtung bzw. eines elektronischen Archivsystems an, welche die Effizienz von Abfragen bzw. die Effizienz der Erschließung von Dokumenten generell erhöhen. Die praktische Anwendung der Erfindung hängt dabei entscheidend von verschiedenen (nicht-technischen) konzeptionellen Vorgaben (Ontologiedesign, Kriterien für geeignete Ontologien, Bestimmung geeigneter Prüfkriterien usw.) ab. Da diese recht vielschichtig sind und für die technische Spezifikation der Erfindung nicht unmittelbar relevant sind, werden diese im Folgenden nur insoweit erläutert, als sie zum Verständnis der technischen Spezifikation der Erfindung wichtig sind.

Einige wichtige Definitionen seien an dieser Stelle kurz angegeben:
Ontologie: Eine Ontologie ist ein geordnetes Ganzes von Elementen und Relationen, durch das ein Wissensgebiet explizit strukturiert wird.
Ontologiebasierte Metadaten: ontologiebasierte Metadaten sind Metadaten, die Ausprägungen (irgend-) einer Ontologie sind.
Ontologiespezifische Metadaten: ontologiespezifische Metadaten sind Metadaten, die Ausprägungen bestimmter Ontologien sind und deren Bezug auf eine bestimmte Ontologie validiert ist. Ontologiespezifische Metadaten sind damit - per definitionem - immer zugleich ontologiebasierte Metadaten.
Prüfkriterien für ontologiebasierte Metadaten: Aus jeder (potentiell) relevanten Ontologie wird jeweils (mindestens) ein Prüfkriterium abgeleitet, dass es ermöglicht, Metadaten daraufhin zu prüfen, ob sie Ausprägungen der entsprechenden Ontologie sind. So wird es möglich einen expliziten Bezug zwischen Metadaten und zugehörigen Ontologien herzustellen. Ontologiebasierte Metadaten werden über das Prüfkriterium identifiziert und im Umkehrschluss werden über das Greifen des entsprechenden Prüfkriteriums die (tatsächlich) relevanten Ontologien identifiziert. Das Greifen des Prüfkriterium validiert also zugleich die (tatsächliche) Relevanz von Ontologien für ein Suchproblem. Über die Prüfkriterien werden Metadaten und Ontologien also wechselseitig validiert.
Prüfontologie: Ein Prüfkriterium für ontologiebasierte Metadaten, dass zur Prüfung der Metadaten direkt auf bestimmte Ontologien zurückgreift. Es wird also überprüft, ob Metadaten die Ausprägungen bestimmter Prüfontologien - und damit ontologiebasiert - sind.
Metadatenmatrix: Die Metadatenmatrix gibt zu jedem Dokument einer Treffermenge bzw. Vergleichsmenge (Doc 1, Doc 2, ..., Doc n) die zugehörigen Ausprägungen ontologiespezifischer Metadaten (ox/Doc 1, oy/Doc 2, ..., oz/Doc n) an.
Ausprägungsliste der Metadaten: Die Ausprägungsliste der Metadaten gibt zu ontologiespezifischen Metadaten (Oi) die zugehörigen Ausprägungen (oj) - über eine Maßzahl - an, bspw. (O1/3, O2/5, O3/8, ..., On/m). Die Maßzahl resultiert aus der vorhergehenden Analyse der Metadatenmatrix mittels eines voreingestellten statistischen Verfahrens.
Relevanz: Bezeichnet die Eignung bestimmter Ausgangsdaten (bspw. von Suchwerten, Metadaten, Ontologien usw.) zur Hypothesenbildung und wird vorzugsweise durch eine zugehörige Maßzahl angegeben.
Signifikanz: Bezeichnet die Eignung (relevanter) Hypothesen zur Lösung eines Suchproblems. Die Qualität der Hypothesen kann automatisch mit Hilfe von Signifikanztests getestet (und wird vorzugsweise durch eine zugehörige Maßzahl angegeben) oder manuell durch einen Nutzer bestimmt werden.

Zweckmäßig ist es, dass die Beobachtungseinheit des Spezifikationsmoduls so ausgelegt ist, dass die Prüfkriterien für ontologiebasierte Metadaten entweder
(1) statisch angelegt sind. Die Prüfkriterien werden in Bezug auf vorgegebene Ontologien festgelegt, d.h. dass ausschließlich bestimmt wird, ob Metadaten einer Treffermenge, die Ausprägungen bestimmter vorgegebener Ontologien sind. Die Beobachtungseinheit gibt also das Vorhandensein bzw. das Nichtvorhandensein entsprechender Metadaten und damit zugleich die Relevanz der entsprechenden Ontologien an.
   oder
(2) dynamisch angelegt ist. Dazu ist zweckmäßigerweise eine Generatorentität vorgesehen, die die Prüfkriterien kontextsensitiv erzeugt. Die Generatorentität kann dazu bspw. auf einen Pool von Ontologien zurückgreifen. Diese können vorab eingespeichert sein, von einem Benutzer dynamisch eingegeben sein oder aus einer externen Quelle bezogen sein. Es soll auch nicht ausgeschlossen werden, dass Prüfontologien basierend auf gewissen Basisinformationen, die durchaus auf den Metadaten beruhen können, synthetisch erstellt werden. Die Beobachtungseinheit prüft dazu bspw. sukzessiv, welche Metadaten Ausprägungen von Prüfontologien sind und gibt dem Nutzer dann die für die Abfrage (bzw. für die Metadaten der Dokumente der Treffermenge) tatsächlich relevanten Ontologien an. So wird eine transparente Spezifikation bzw. Segmentierung des Suchraums ermöglicht.

Im Anschluss werden dann vom Nutzer aus der Menge der (tatsächlich) relevanten Ontologien, die signifikanten Ontologien ausgewählt und bezogen auf gewählte Ontologien bzw. den gewählten Suchraum, werden die ontologiespezifischen Metadaten aus den Dokumenten der Treffermenge extrahiert. Es besteht die Option in der Beobachtungseinheit vorgebbare Prüfbedingungen für die Auswahl der Ontologien anzulegen, d.h. signifikante Ontologien werden dann automatisch gewählt.

Es wird davon ausgegangen, dass sich, in einem hinreichend großen Suchraum wie dem WWW, in jeder beliebigen Treffermenge eine hinreichend große Zahl von Dokumenten findet, deren Metadaten durch Ontologien spezifiziert sind. Sollte dies für einzelne Abfragen nicht der Fall sein, müsste der Nutzer entweder die Abfrage reformulieren oder die Metadaten ohne expliziten Bezug auf eine Ontologie, auf ontologiespezifische Metadaten - also im Rahmen eines unspezifischen "relevance feedback" - für eine Verfeinerung der Abfrage einsetzen (Betriebsart unspezifische Metadaten).

Soweit mindestens eine signifikante Ontologie ausgewählt wird, werden die entsprechenden ontologiespezifischen Metadaten extrahiert und in der Betriebsart für ontologiespezifische Metadaten als konsistente Metadatenmatrix dargestellt.

Zweckmäßig ist es, dass die Auswertungseinheit des Spezifikationsmoduls so ausgelegt ist, dass sie, mittels eines statischen Verfahrens, die Metadatenmatrix analysiert und eine Ausprägungsliste der Metadaten ausgibt.

Vorzugsweise ist das Rekursionsmodul so ausgebildet, dass vom Spezifikationsmodul ermittelte Suchwerte, also gemäß dem statistischen Verfahren relevante Metadaten, an das Suchmodul zurück übergeben werden. Damit wird erreicht, dass die ausgewählten Suchwerte und geeignete logische Verknüpfungen derselben im Suchmodul dargestellt sind und der nächste Umlauf initiiert ist. Durchläuft eine Abfrage das Suchmodul, das Spezifikationsmodul und das Rekursionsmodul, so wird dies als ein Umlauf bezeichnet.

Dazu werden die vom Spezifikationsmodul ermittelten, ontologiespezifischen Metadaten aus der Ausprägungsliste vom Rekursionsmodul als semantisch relevante Hypothesen für die Lösung des jeweiligen Suchproblems interpretiert. Die Hypothesen sind qualifiziert, d.h. sie repräsentieren konsistent eine ontologiebasierte Speicherorganisation und sind über die Auswertungseinheit des Spezifikationsmoduls - mit Hilfe statistischer Verfahren - gewichtet. Die Hypothesen lassen sich durch einen Nutzer, dazu ist an dieser Stelle ein Benutzereingriff vorgesehen, sowie halbautomatisch oder automatisch evaluieren.

Für die weitgehend automatische Evaluierung der Hypothesen ist es zweckmäßig, dass das Rekursionsmodul über eine Auswahleinheit und eine Evaluierungseinheit verfügt. Die Funktion der Evaluierungseinheit besteht darin, die Hypothesen also die zuvor vom Spezifikationsmodul extrahierten Metadaten, mittels einer vorgebbaren Prüfbedingung, zu bewerten. Vorzugsweise wird anhand der Prüfbedingung ermittelt, mit welcher Wahrscheinlichkeit eine vom Spezifikationsmodul vorgeschlagene Hypothese, tatsächlich - also unter Einbeziehung der gesamten Wissensbasis - eine gute Lösung des ursprünglichen Suchproblems ist. Die Evaluierungseinheit unterzieht jede Hypothese einem entsprechenden Signifikanztest. Vorzugsweise ist dazu ein Scoring-Modul vorgesehen, das zur Gewinnung einer Maßzahl für die Signifikanz jeder der Hypothesen ausgebildet ist.

Über Maßzahlen für die Signifikanz der Ausgangshypothesen werden dann auch die Suchwerte für den folgenden Rekursionsschritt bestimmt. D.h. die Auswahleinheit greift sukzessiv die signifikantesten Ausgangshypothesen heraus und übergibt die entsprechenden Suchwerte an das Suchmodul und initiiert so die jeweils folgenden Rekursionsschritte. Suchwerte sind damit signifikante (ontologiespezifische) Metadaten und logische Verknüpfungen derselben. Während die Evaluierungseinheit Maßzahlen für die semantische Signifikanz jeder Hypothese ermittelt, vergleicht die Auswahleinheit die Maßzahlen auch über die verschiedenen Rekursionsschritte und greift, wenn ein Abbruchkriterium erreicht ist, die Hypothesen mit der - unter Einbeziehung aller Rekursionsschritte - höchsten semantischen Signifikanz heraus. Die signifikantesten Hypothesen werden an den Nutzer ausgegeben.

Die Spezifikation kann dabei mit Hilfe des Rekursionsmoduls automatisch weitergeführt werden, es kann aber auch ein Benutzereingriff zwischen den Rekursionsschritten vorgesehen sein. Dazu ist zweckmäßig, die vom Spezifikationsmodul ausgegebenen Vorschläge bzw. Hypothesen zur Spezifikation der Abfrage an eine Ausgabeeinheit zu übermitteln. Hierdurch können die relevanten Vorschläge mit Hilfe der Eingabeeinheit durch den Benutzer ausgewählt werden oder es kann alternativ auch ein Abbruchsignal für die Rekursion ausgelöst werden. Das Rekursionsmodul prüft nach jedem Umlauf, ob ein Abbruchsignal vorliegt. Im Rekursionsmodul sind ggf. bedingte Vorgaben für die geeigneten Anschlussoperationen angelegt.

Das Rekursionsmodul erfüllt also, neben der Evaluierung der Hypothesen des Spezifikationsmoduls, zwei weitere wesentliche Funktionen. Zum einen organisiert es die Auswahl der Anfangsbedingung für den jeweils nachfolgenden Umlauf. Dazu kann die Auswahleinheit des Rekursionsmoduls dazu ausgebildet sein, dass sie einen Selektor aufweist. Er ist dazu ausgebildet, die Hypothesen für den nächsten Umlauf herauszugreifen. Zweckmäßigerweise ist er so ausgebildet, dass er eine oder mehrere Hypothesen, nämlich die mit der höchsten Bewertung, an das Suchmodul zurückführt. Zum anderen überprüft das Rekursionsmodul, ob durch den jeweils vorhergehenden Umlauf Abbruchbedingungen für die Rekursion erfüllt wurden und organisiert die Anschlussoperationen.

Nachfolgend seien einige verwendete Begriffe erläutert:
Unter einem Speicher wird eine Einrichtung zum Speichern von Dokumenten über eine längere Zeit verstanden. Speicher in diesem Sinne sind insbesondere Festplatten, CD- oder DVD-Datenträger, andere magnetische oder optische Datenträger, aber auch auf Halbleitertechnologie basierende Speicherkarten, wie bspw. CF- oder SD-Karten. Vorzugsweise ist der Speicher als verteilter Speicher ausgeführt. Unter einen verteilten Speicher wird verstanden, dass der Speicher aus mehreren Komponenten zusammengesetzt ist, die an verschiedenen Orten installiert sind und über geeignete Datenleitungen miteinander verbunden sind. Dies ermöglicht es, für die erfindungsgemäße Abfrageeinrichtung auf Dokumente in einem verteilten System zuzugreifen, wobei die einzelnen Komponenten über Datenleitungen wie bspw. das Internet miteinander verbunden sind. Dadurch können auch räumlich weit entfernt auseinander befindliche Datensammlungen zu einem übergreifenden Archivsystem zusammengefasst werden, in der dann gemäß der Erfindung abgefragt werden kann. Die Stärke der Erfindung, die impliziten, durch die Metadaten repräsentierten Strukturen eines elektronischen Archivs transparent zu machen, wirkt sich hierbei besonders vorteilhaft aus.

Unter einer Eingabe- und einer Ausgabeeinheit wird ein zur Interaktion mit einem menschlichen Benutzer geeignetes Terminal verstanden. Es umfasst in der Regel einen Bildschirm zur Ausgabe und eine Tastatur mit einer Zeigeeinrichtung (Maus) zur Eingabe. Andere Arten von Eingabe-, Ausgabeeinheiten sollen aber nicht ausgeschlossen sein. Insbesondere soll auch umfasst sein, dass die Daten auf digitalem Weg von einem anderen Computersystem eingegeben bzw. abgerufen werden.

Eine Abfrageeinrichtung ermöglicht eine automatisierte Spezifikation von Abfragen in beliebigen elektronischen Archivsystemen, vor allem soweit die archivierten Dokumente mit Hilfe von ontologiebasierten Metadaten inhaltlich strukturiert sind.

Bei dem im folgenden beschriebenen erfindungsgemäßen Archivsystem wird zusätzlich ein Erschließungsmodul eingesetzt, über dass die einheitliche Erschließung der Dokumente technisch kontrolliert wird. Während die zuvor vorgestellte Abfrageeinrichtung Dokumente mit ontologiebasierten Metadaten auch im Rahmen einer heterogenen Systemarchitektur, wie beispielsweise dem WWW, identifizieren und nutzen kann, also die Abfragen im Rahmen einer vorgegebenen - zunächst jedoch intransparenten - Speicherorganisation optimiert, wird durch das Erschließungsmodul explizit eine Grenze zu einem unter Kontrolle des Archivsystems stehenden Speicher ausgebildet, womit innerhalb der Grenze eine ontologiebasierte Speicherorganisation, die Organisation der Dokumenten nach Maßgabe vorgegebener Ontologien, und damit von vorneherein eine homogene Systemarchitektur erzwungen werden. Dem erfindungsgemäßen Archivsystem liegt die Aufgabe zugrunde, die durch die fachliche Erschließung der bereits im Archiv vorhandenen Dokumente gewonnene Wissensbasis, so zu inferieren, dass das System für fachliche Fragen eigenständige Lösungsvorschläge generiert und zugleich die fachliche Erschließung der Dokumente eines elektronischen Archivs so zu automatisieren, dass eine qualitativ hochwertige Erschließung, also Selektion und Klassifikation großer Dokumentmengen und somit eine homogene Systemarchitektur gewährleistet wird.

Erfindungsgemäß ist ein elektronisches Archivsystem gegeben, mit einem Speicher, einer Recheneinheit, einer Eingabe- und einer Ausgabeeinheit, wobei der Speicher ausgebildet ist zum Speichern einer Menge von Dokumenten, die gegliedert sind in (Nutz-)Daten und Metadaten, und wobei die Recheneinheit der Datenverarbeitung dient. Die Datenverwaltung wird vorzugsweise über eine Datenbank organisiert. Die Dokumente des Archivs werden über die Recheneinheit mit Hilfe eines Indexierungsmoduls indexiert, wobei ein Suchmodul, mittels der Recheneinheit, so ausgebildet ist, dass mit Rückgriff auf den Index, Dokumentmengen (Treffermengen) generiert werden, die die Ausprägungen von Suchwerten enthalten (so bspw. die Treffermenge einer Volltextsuche). Suchwerte sind vorzugsweise Daten, Metadaten und logische Verknüpfungen derselben. Andere Zugriffsweisen des Suchmoduls auf die Dokumente seien aber nicht ausgeschlossen. Darüber hinaus ist gegeben ein Erschließungsmodul, dass die zu erschließenden Dokumente zur Bearbeitung verfügbar macht und die Eingabe von Metadaten (Typ 2) für die fachliche Erschließung der Dokumente des Archivs ermöglicht.

Bevor die technischen Zusammenhänge genauer beschrieben werden, noch einige Worte zu den konzeptionellen Vorgaben.

Wesentlich für die Leistungsfähigkeit des erfindungsgemäßen Archivsystems sind aussagefähige Metadaten. Daher ist eine homogene Systemarchitektur überaus wichtig, bei der die Datenintegrität der Metadaten des elektronischen Archivsystems durch ein konsistentes Wissensmodell, durch Ontologien kontrolliert wird. Die Bedeutung aussagefähiger Metadaten wird auch vom WorldwideWeb Konsortium gesehen, welches unter diesen Prämissen das Semantic Web vorantreibt.

Erst eine homogene Systemarchitektur ermöglicht, die Leistungsfähigkeit von Computersystemen für die Verarbeitung von Texten bzw. Multimediainhalten und des darin repräsentierten Wissens in spezifischer Weise fruchtbar zu machen. Eine homogene Systemarchitektur, die sich aus der konsistenten Verwendung aussagefähiger Metadaten ergibt, bezeichnet einen eigenständigen Anwendungsbereich der computergestützten Verarbeitung von Texten und Multimediadaten, für den das erfindungsgemäße Archivsystem besondere Vorteile bietet. Diese Systemarchitektur ist nicht auf das zur Speicherung der Daten verwandte Datenbankschema bzw. die verwendete Datenbank zurückführbar.

Die formalen Vorgaben für eine homogene Systemarchitektur bilden die bekannten Dokumentbeschreibungssprachen wie XML, SGML. Die mit Hilfe der Dokumentbeschreibungssprachen generierten Metadaten ermöglichen, dass in den Texten eines Archivsystems repräsentierte "Wissens" explizit anzugeben.

Die präzise, konsistente Verwendung der Metadaten, die zu einer homogenen Systemarchitektur führt, wird dann vornehmlich unter den Begriffen Wissensmodellierung bzw. Ontologien thematisiert (vgl. hierzu Dieter Fensel, Ontologies: A Silver Bullet for Knowledge Management and Electronic Commerce, Springer Verlag in Berlin, 2004). Unter Ontologien wird dabei eine durch eine Nutzergemeinde verhandelte und akzeptierte Beschreibungsform, eine explizite, geteilte Konzeptualisierung eines Gegenstandsbereichs verstanden.

Im Kontext der elektronischen Archivierung werden durch die Wissensmodellierung bzw. Ontologien zwei Ebenen berührt. Zum einen die Festlegung der wesentlichen Elemente und Relationen der Dokumente in Form des Dokumentformats (<Autor>, <Adresse> usw.), wodurch eine homogene Erschließung von Texten möglich wird. Referenzpunkt der Konzeptualisierung ist hier die Textstruktur der zu archivierenden Texte (Presseartikel, Urteile, Diagnosen). Die zweite Ebene der Wissensmodellierung betrifft eine konsistente Konzeptualisierung des Gegenstandsbereichs auf den sich die Texte thematisch bzw. fachlich beziehen. Referenzpunkt ist hier die Wissensdomäne (wie bspw. Physik, Biologie, Medizin, Recht usw.). Dies ermöglicht eine konsistente fachliche Erschließung bzw. Klassifikation der Texte.

Dokumente sind durch Metadaten erschlossene Texte, wobei im Kontext homogener Systemarchitekturen die konsistente Wissensmodellierung, Ontologien eine hohe Datenintegrität der Metadaten garantiert. Die homogene Erschließung der Texte und Multimediadaten im Hinblick auf die einheitliche Anwendung eines Dokumentformats (Metadaten (Typ 1)) wird im folgenden vorausgesetzt. Es sei darauf hingewiesen, dass die Metadaten, die die fachliche Erschließung repräsentieren (Metadaten (Typ 2)) auf der Ebene des Dokumentformats im folgenden durch die Metadaten "Typus" beschrieben werden und entsprechend im Segment "Typus" enthalten sind. Neben konzeptionellen Implikationen ist diese Unterscheidung im Kontext der Erschließung auch von technischer Bedeutung: Die Annotation von Metadaten vom Typ 2, lässt sich weitgehend automatisieren, da die Metadaten lediglich in ein, bereits im Dokumentformat angelegtes, Segment eingefügt werden. D.h. das erfindungsgemäße Erschließungsmodul muss für die Annotation der Metadaten vom Typ 2, im Gegensatz zu den Anforderungen für die Annotation von Metadaten vom Typ 1, nicht das gesamte Dokument aufwändig (re-) strukturieren.

Erfindungsgemäß ist vorgesehen, dass die Recheneinheit bzw. Datenverarbeitungseinheit des elektronischen Archivsystems - zusätzlich zum Suchmodul - ein Spezifikationsmodul und ein Rekursionsmodul umfasst, wobei das Spezifikationsmodul eine Beobachtungseinheit, die dazu ausgebildet ist im Abfragemodus eine mit dem Suchmodul ermittelte Treffermenge und im Erschließungsmodus eine mit dem Erschließungsmodul oder dem Suchmodul ermittelte Vergleichsmenge (die im Erschließungsmodus an die Stelle der Treffermenge tritt) zu übernehmen und die mit den Dokumenten der jeweiligen Menge verbundenen Metadaten, mittels mindestens eines Prüfkriteriums daraufhin zu überprüfen, welche Metadaten mit vorgegebenen Ontologien übereinstimmen, die der internen Speicherorganisation zugrunde liegen, und die entsprechenden Metadaten vom Typ 2 herauszugreifen und als Metadaten (Typ 2)-Matrix auszugeben, und eine Auswertungseinheit umfasst, die zur Analyse der Metadaten (Typ 2)-Matrix mittels eines voreinstellbaren statistischen Verfahrens ausgebildet ist und eine Ausprägungsliste der ontologiespezifischen Metadaten (Typ 2) ausgibt und wobei das Rekursionsmodul eine Evaluierungseinheit, die dazu ausgebildet ist, Metadaten der Ausprägungsliste als Hypothesen für die Lösung des jeweiligen Suchproblems anzugeben und diese einem Nutzer vorzuschlagen oder Signifikanztests automatisch zu unterziehen, und eine Auswahleinheit enthält, die dazu ausgebildet ist, signifikante Hypothesen über die Auswahleinheit herauszugreifen und als Suchwerte an das Suchmodul zur Wiederholung zu übergeben, bis ein Abbruchsignal angelegt ist. Die Auswahleinheit greift, nach Erreichen der Abbruchbedingungen, die signifikantesten Hypothesen heraus und gibt sie an den Nutzer aus.

Außerdem ist mit Vorteil vorgesehen, dass das Erschließungsmodul eine Selektions- und eine Klassifikationskomponente umfasst, wobei
(1) eine Auswertungseinheit der Selektionskomponente die Relevanz der zu erschließenden Dokumente ermittelt, indem - mittels eines statistischen Verfahrens - ein Profil des zu erschließenden Dokuments gebildet und mit Profilen der Wissensbasis verglichen wird und so eine (statistische) Maßzahl der Relevanz eines jeden zu erschließenden Dokuments ermittelt wird und alle zu erschließenden Dokumente, die eine vorgegebene Mindestwert unterschreiten vom weiteren Erschließungsprozess ausschlossen werden (dies ist insbesondere vorgesehen, um zu bestimmen, ob ein Dokument irrelevant ist oder mit einem bereits erschlossenen übereinstimmt) und
(2) eine Auswertungseinheit der Selektionskomponente die Signifikanz der relevanten Dokumente ermittelt, indem die Profile der relevanten Dokumente untereinander verglichen werden
und eine Beobachtungseinheit der Selektionskomponente nur die Dokumente herausgreift, die im Hinblick auf eine Maßzahl für die Signifikanz signifikant sind
und an die Klassifikationskomponente übergibt, in der die einzuspeichernden Dokumente in einer Bearbeitungseinheit für den Benutzer dargestellt sind, so dass der Nutzer zur Ermittlung eines Vorgabekriteriums für eine als Eingangssignal geeigneten Vergleichsmenge für die Klassifikation
(1) relevante Suchwerte mittels Drag and Drop aus den einzuspeichernden Dokumente extrahieren und an das Suchmodul übermitteln kann, das die Vergleichsmenge bildet
   oder das Vorgabekriterium bzw. die Vergleichsmenge automatisch ermittelt wird, indem entweder
(2) eine Auswertungseinheit der Klassifikationskomponente - mittels eines statistischen Verfahrens - geeignete Suchwerte aus den zu klassifizierenden Dokumenten herausgreift und als Vorgabekriterium an das Suchmodul übergibt, das die Vergleichmengen ermittelt oder
(3) eine Auswertungseinheit der Klassifikationskomponente - mittels eines statistischen Verfahrens - ein (weiteres) Profil des zu klassifizierenden Dokuments erzeugt und dieses mit den (bspw. aus der Erschließung verfügbaren) Profilen bereits klassifizierter Dokumente im Archiv vergleicht und aus n Dokumenten, die dem zu klassifizierenden Dokument am ähnlichsten sind, die Vergleichsmenge bildet,
   und die jeweilige Vergleichsmenge an das Spezifikationsmodul übergeben wird und die Spezifikation mittels des Rekursionsmoduls solange fortgesetzt wird, bis ein Abbruchsignal angelegt ist und die für die Klassifikation relevanten ontologiespezifischen Metadaten (Typ 2) an das Erschließungsmodul zurück übermittelt und für eine fachliche Erschließung der Dokumente einem Nutzer vorgeschlagen oder automatisch mit diesen verknüpft werden.

Das erfindungsgemäße elektronische Archivsystem kontrolliert eine konsistente übergeordnete Speicherorganisation, indem die - für eine bestimmte Domäne - relevanten Dokumente ausschließlich mit Metadaten erschlossen werden, die Ausprägungen der für die Domäne und damit für das Archiv vorgegebenen Ontologien sind. Damit sind die Akzente verschoben. Während die Beobachtungseinheit des Spezifikationsmoduls der erfindungsgemäßen Abfrageeinrichtung im Kontext einer heterogenen Systemarchitektur so ausgelegt ist, dass die Parameter der Speicherorganisation, vor allem die ontologiebasierten Metadaten und die relevanten Ontologien, die im Rahmen einer heterogenen Systemarchitektur angelegt sind - mit allen Vorzügen und Restriktionen - zunächst transparent gemacht werden müssen, werden die Parameter einer ontologiebasierten Speicherorganisation durch das Erschließungsmodul des erfindungsgemäßen Archivsystems explizit auf bestimmte, vorgegebene Ontologien - und damit im Hinblick auf die spezifischen Informationsbedürfnisse einer Nutzergruppe - justiert.

Dem Erschließungsmodul kommt damit bei dem erfindungsgemäßen elektronischen Archivsystem insofern eine zentrale Rolle zu, als dass es bereits die Rahmenbedingungen der Abfrage, also die Speicherorganisation, kontrolliert. Jedes ins Archiv einzuspeichernde Dokument wird mit Hilfe vorgegebener Ontologien - vorzugsweise automatisch - spezifiziert.

Vorzugsweise ist die Selektionskomponente des Erschließungsmoduls so ausgebildet, dass mit Hilfe einer Beobachtungseinheit der Selektionskomponente die für das Archivsystem formal signifikanten Dokumente in einer definierten Grundgesamtheit identifiziert, und zwar so, dass
(1) in einem ersten Schritt - über eine Auswertungseinheit - für jedes Dokument der Grundgesamtheit ein formales Profil ermittelt (z.B. über die statistische Analyse von Worthäufigkeiten) und mit den, zuvor mit dem selben statistischen Verfahren erstellten, formalen Profilen der verschiedenen Klassen der Wissensbasis verglichen wird (eine Klasse der Wissensbasis ist dabei definiert, als eine Menge von Dokumenten, die mit den gleichen ontologiespezifischen Metadaten (Typ 2) verknüpft bzw. signiert sind). Die Auswertungseinheit ermittelt Maßzahlen für das "Matching" der Profile, die die formale Relevanz eines jeden Dokuments für das Archiv angeben. Die Dokumente, die einen vorgegebenen Mindestwert für die formale Relevanz unterschreiten werden aus dem Erschließungsprozess eliminiert.
(2) in einem zweiten Schritt - über eine Auswertungseinheit - das Profil jedes formal relevanten Dokuments mit den Profilen aller anderen Dokumente, die für dieselbe Klasse formal relevant sind, verglichen wird. Die Dokumente mit der jeweils höchsten Maßzahl für die formale Relevanz, sind - bezogen auf eine Klasse - formal signifikant. Die formal signifikanten Dokumente werden durch eine Beobachtungseinheit der Selektionskomponente herausgegriffen und an die Klassifikationskomponente übergeben.

Vorzugsweise ist die Klassifikationskomponente des Erschließungsmoduls so ausgebildet, dass sie eine Bearbeitungseinheit umfasst, in der das einzuspeichernde Dokument für den Nutzer dargestellt ist und über die die einzuspeichernden Dokumente mit den relevanten ontologiespezifischen Metadaten verknüpft werden können. Dabei ermöglicht die Klassifikationskomponente eine automatisierte Klassifikation der Dokumente, indem, ausgehend vom einzuspeichernden Dokument, - mittels eines Vorgabekriteriums - eine Vergleichsmenge gebildet wird, die einen (semantisch) relevanten Ausschnitt der Wissensbasis repräsentiert, und zwar indem entweder
(1) über die Bearbeitungseinheit der Klassifikationskomponente Suchwerte durch den Nutzer manuell aus dem einzuspeichernden Dokument, insbesondere durch Drag and Drop, herausgegriffen und als Vorgabekriterium an das Suchmodul zur Ermittlung der Vergleichsmenge übergeben werden oder
(2) über eine Auswertungseinheit - ausgehend von einer statistischen Analyse der formalen Datenstruktur des Dokuments - Hypothesen über relevante Suchwerte formuliert werden. Die Signifikanz der Hypothesen werden durch einen Benutzer überprüft oder - mittels eines Prüfkriteriums - automatisch getestet. Die signifikanten Hypothese werden - über eine Beobachtungseinheit der Klassifikationskomponente - als Vorgabekriterium an das Suchmodul übergeben, das mit Hilfe der Suchwerte die Vergleichsmenge ermittelt oder
(3) über eine Auswertungseinheit - ausgehend von einem, mit Hilfe eines statischen Verfahrens, ermittelten Profils des einzuspeichernden Dokuments - Maßzahlen für das "Matching" zwischen dem Profil des einzuspeichernden Dokuments und den Profilen eines jeden Dokuments des Archivs bestimmt werden. Die entsprechend der Maßahlen ähnlichsten Dokumente bilden eine Vergleichsmenge. Die Vergleichsmenge (Treffermenge) wird als Vorgabekriterium direkt an das Spezifikationsmodul übermittelt.

Das Auswahl des jeweils adäquaten Verfahrens zur Bildung der Vergleichsmenge richtet sich nach konzeptionellen Vorgaben.

Die Vergleichsmenge bildet im Erschließungsmodus - analog zur Treffermenge der Abfrage im Abfragemodus - den Ausgangspunkt, hier jedoch für die Spezifiktion der Vorgaben für die Klassifikation. Über die Beobachtungseinheit des Spezifikationsmoduls werden wiederum die Metadaten extrahiert. Die extrahierten Metadaten sind Ausprägungen der vorgegebenen Ontologien, die die übergeordnete Speicherorganisation des Archivs repräsentieren. Die mittels eines statistischen Verfahrens - aus der Metadatenmatrix (Typ 2) - ermittelte Ausprägungsliste der Metadaten (Typ 2) wird dann an das Rekursionsmodul übergeben, wo die ontologiespezifischen Metadaten als semantisch relevante Hypothese für die Lösung des Suchproblems (hier als semantisch relevante Vorgaben für die Klassifikation des einzuspeichernden Dokuments) angegeben werden. Die semantisch relevanten Hypothesen werden über die Evaluierungseinheit des Rekursionsmodul evaluiert und die Auswahleinheit des Rekursionsmodul gibt sie, nach Erreichen eines Abbruchkriteriums, an die Klassifikationskomponente zurück. Die Klassifikationskomponente schlägt die semantisch signifikanten Hypothesen - über die Bearbeitungseinheit - einem Nutzer vor oder verknüpft die entsprechenden Metadaten automatisch mit dem Dokument (Feedbackschleife C zur iterativen Bestimmung signifikanter (ontologiespezifischer) Metadaten für die Klassifikation).

Das erfindungsgemäße Archivsystem leistet im Erschließungsmodus, mit Hilfe einer innovativen Anordnung verschiedener statistischer Verfahren zur formalen Textanalyse, eine Selektion der einzuspeichernden Dokumente und ermittelt Vorgabekriterien für die Klassifikation, der zu klassifizierenden Dokumente. Auf Basis der jeweiligen Vergleichsmenge werden in Bezug auf vorgegebene Ontologien - mittels der Feedbackschleife C - semantisch signifikante Vorgaben für eine automatisierte Klassifikation der Dokumente ermittelt.

Das erfindungsgemäße Archivsystem arbeitet im Erschließungs- und Abfragemodus mit denselben Ontologien, wodurch die effiziente Steuerung der Archivprozesse garantiert wird.

Die Erfindung wird im folgenden im Kontext der erfindungsgemäßen Abfrageeinrichtung und des erfindungsgemäßen Archivsystems unter Bezugnahme auf die beigefügte Zeichnung erläutert, in der vorteilhafte Ausführungsbeispiele dargestellt sind. Es zeigen:
- Fig. 1: eine schematische Übersichtsdarstellung eines konventionellen Archivsystems mit homogener Sys- temarchitektur (Stand der Technik)
- Fig. 2a: eine schematische Übersichtsdarstellung der er- findungsgemäßen Abfrageeinrichtung (Feedbackschleife B)
- Fig. 2b: eine schematische Übersichtsdarstellung eines Ausführungsbeispiel der Erfindung zur automati- sierten Implementierung und Nutzung einer homoge- nen Systemarchitektur (Feedbackschleifen B und C)
- Fig. 3a: eine schematische Übersichtsdarstellung des er- findungsgemäßen Archivsystems in einem Erschlie- ßungsmodus (Feedbackschleife C);
- Fig. 3b: eine schematische Übersichtsdarstellung des er- findungsgemäßen Archivsystems in einem Abfragemo- dus (Feedbackschleife B);
- Fig. 4a: eine Darstellung von einem ersten Satz von Bei- spieldaten; in dem Lösungsvorschläge mittels des erfindungsgemäßen Archivsystems generiert werden
- Fig. 4b: eine Darstellung von einem zweiten Satz von Bei- spieldaten; in dem Lösungsvorschläge mittels ei- nes konventionellen Expertensystems generiert werden (Stand der Technik)
- Fig. 5a,b: eine Darstellung des zweiten Satzes von Beispiel- daten, in dem Lösungsvorschläge mittels des er- findungsgemäßen Archivsystems generiert werden; und
- Fig. 6: eine formale Struktur des in dem Speicher enthal- tenen Archivs.

Zur Funktionsweise der Erfindung werden folgende Erläuterungen gegeben:

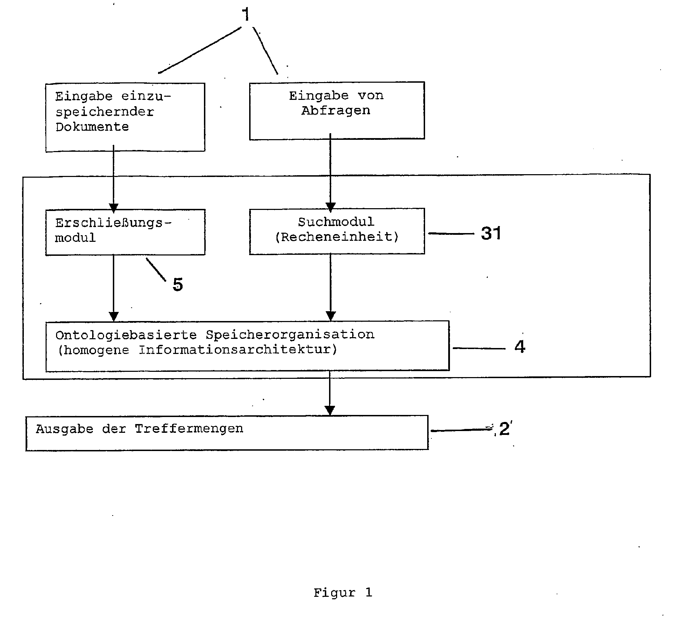

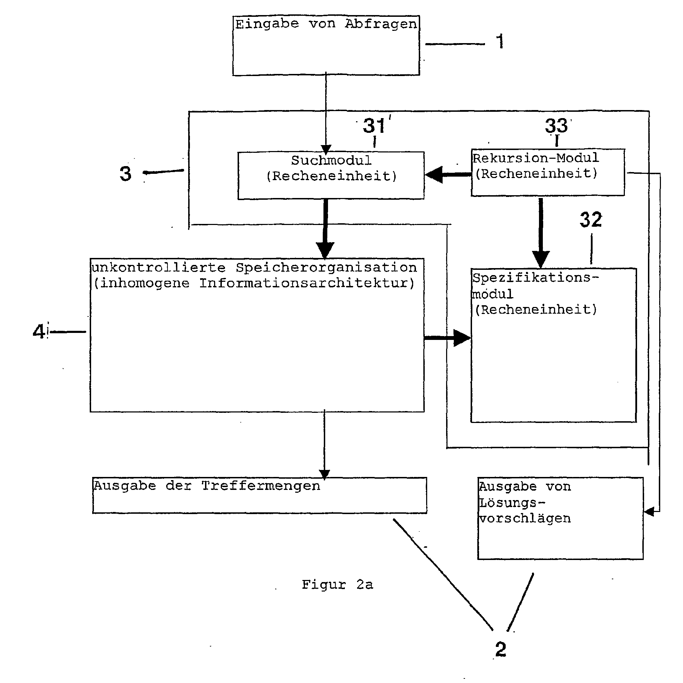

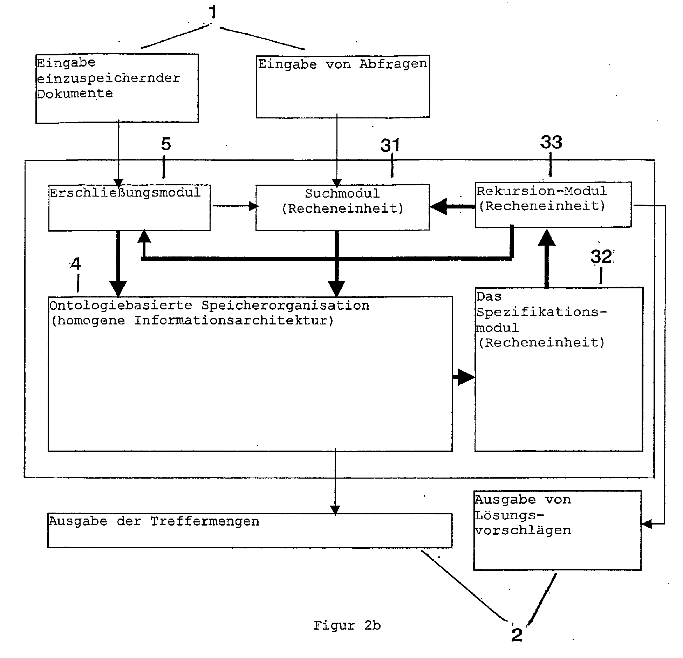

In Fig. 2b ist eine schematische Übersichtsdarstellung eines Ausführungsbeispiels der erfindungsgemäßen Archivsystems zur Implementierung und Nutzung einer homogenen Systemarchitektur dargestellt. Zum Vergleich ist in Fig. 1 ein Beispiel für ein konventionelles Archivsystem mit homogener Systemarchitektur dargestellt.

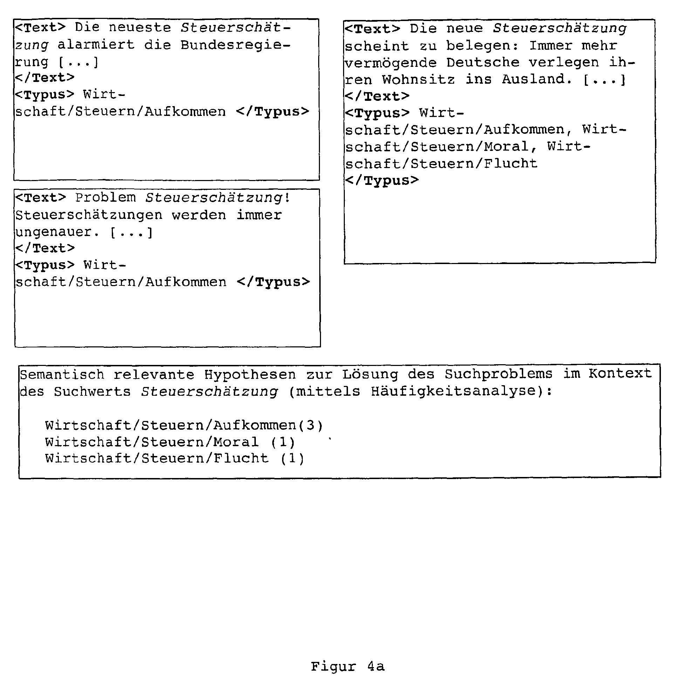

Im Beispiel (vgl. hierzu Fig. 4a) wird die homogene Systemarchitektur durch eine Typologie gewährleistet. Unter einer Typologie wird verstanden, eine systematisch geordnete Menge von Typen, die einen Gegenstandsbereich in anpassbarer Weise angemessen konzeptualisiert (so bspw. eine systematische Themengliederungen der Wissensdomänen Wirtschaft, Medizin, Recht usw.).

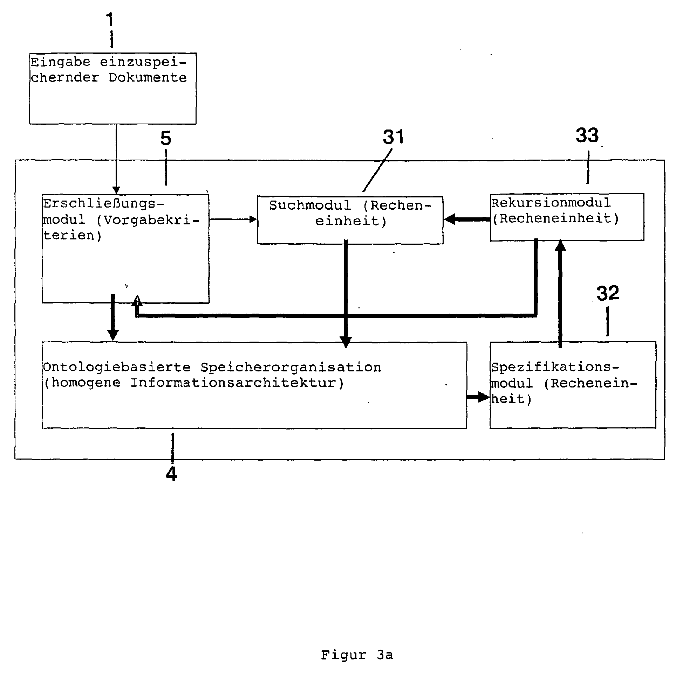

Mittels eines Erschließungsmodul 5 erfolgt die Verknüpfung einzuspeichernder Dokumente mit den gemäß der Typologie relevanten Typen im Segment "Typus". Im Segment "Typus" des Dokuments sind somit die Typendaten (Metadaten (Typ 2)) abgelegt. Über das Segment "Typus" werden auch, mittels des in der Beobachtungseinheit des Spezifikationsmoduls angelegten Prüfkriteriums, entsprechend der vorgegeben Ontologie (hier einer Typologie), die ontologiebasierten Metadaten identifiziert. Die Gesamtheit der erschlossenen Dokumente im Speicher 4 bildet das Archiv - und da die Dokumente durch die Typusdaten fachlich explizit erschlossen bzw. klassifiziert und auf die Typologie zurückbezogen sind, ist das implementierte Archiv zugleich Wissensbasis. Eine besondere Stärke der Erfindung liegt darin, dass sie eine Organisation das Archiv in der Weise sich zu Nutze macht, dass die Wissensbasis auch für eine automatisierte fachliche Erschließung neuer Dokumente - über die Feedbackschleife C - eingesetzt wird (Fig. 3a).

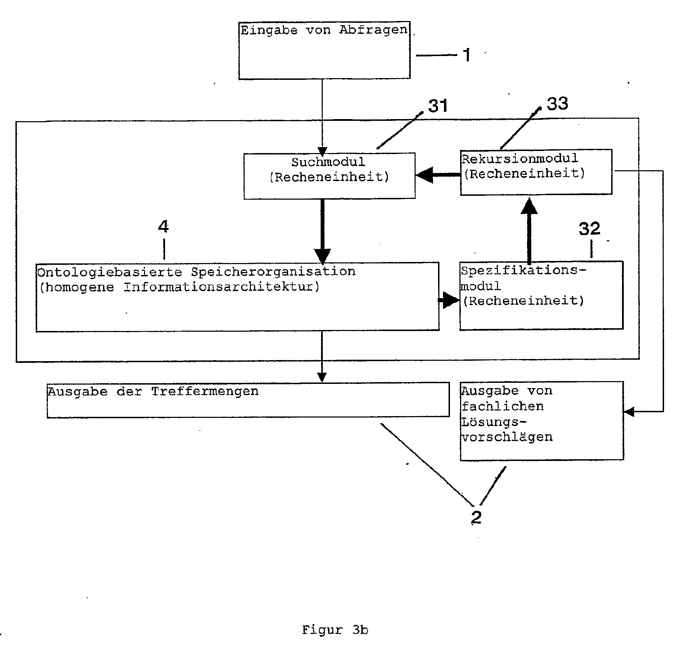

Über die Feedbackschleife B können nun zwei Formen von Abfragen formuliert werden. Zum einen eine konventionelle Archivsuche, bei der Suchwerte über eine Eingabeeinheit 1 eingeben werden und die über das Suchmodul 31 generierte Treffermenge mit Hilfe des Spezifikationsmoduls 32 und des Rekursionsmoduls 33 solange weiter spezifiziert wird, bis am Ende eine Treffermenge bzw. Dokumentmenge von hoher Relevanz in Form einer Trefferliste angezeigt wird. In diesem Fall wird die Effizienz der Archivsuche deutlich erhöht. - Eine zweite Form von Abfragen nutzt die Erfindung vor allem, um mit Hilfe der Wissensbasis einen Überblick über die kollektive Wissenspraxis einer Wissensdomäne zu gewinnen, wie sie durch das fachlich erschlossene Archiv repräsentiert wird. Auch in diesem Fall werden Suchwerte über eine Eingabeeinheit 1 eingeben und die über das Suchmodul 31 generierte Treffermenge mit Hilfe des Spezifikationsmodul 32 ausgewertet. Dabei wird jedoch vorrangig die Spezifikation des Wissens über die Wissensbasis intendiert (in den Beispielen formal über die Typen und die zugehörigen Typendaten repräsentiert). Es werden also mit Hilfe des Rekursionsmodul 33 kontinuierlich ontologiebasierte Wissensbezüge respezifiziert, so dass es auf das jeweilige fachliche Gebiet bezogene Lösungsvorschläge generiert (Fig. 3b). Ein System mit diesen Eigenschaften wird in der einschlägigen Literatur auch als Expertensystem definiert (so bspw. Karl Kubel "Entwicklung und Einsatz von Expertensystemen", Springer-Verlag, Berlin Heidelberg, S.17 f.)

Auf beide Abfrageformen soll in jeweils einem Beispiel eingegangen werden.

In Fig. 4a sind drei fachlich erschlossene Dokumente als ein kleines Archiv dargestellt. Die ontologiebasierte Speicherorganisation ist über nur eine vorgegebene Ontologie (die Typologie) realisiert, weshalb in diesem Spezialfall die durch das Prüfkriterium identifizierten ontologiebasierten Metadaten zugleich ontologiespezifische Metadaten sind. Es handelt sich um ein Beispiel aus dem Bereich der Wirtschaft. Die drei Dokumente weisen einen gemeinsamen Grundaufbau auf. Jedes umfasst ein Segment <Text> und ein Segment <Typus>. Das Segment <Text> enthält den eigentlichen (Fließ-)Text, der aus Gründen der Übersichtlichkeit verkürzt wiedergegeben ist. Das Segment <Typus> enthält die Typusdaten (-ausprägungen), mit denen das Dokument gemäß einer zuvor erstellten Typologie erschlossen wurde. Den Dokumenten können mehrere (l..n) fachlich sinnvolle Typen zugeordnet werden. Das Funktionsprinzip der Erfindung im Kontext einer Archivsuche stellt sich wie folgt dar. In einem ersten Schritt wird mit dem Suchwert, hier das Suchwort "Steuerschätzung", mit Rückgriff auf das Suchmodul 31 eine Treffermenge erzeugt. In dem dargestellten Beispiel eines aus drei Dokumenten bestehenden Archivs, werden alle Dokumente erfasst. In einem zweiten Schritt werden, über das in der Beobachtungseinheit des Spezifikationsmodul 32 angelegte Prüfkriterium, die ontologiebasierten Metadaten, also die Typendaten im Segment <Typus>, identifiziert, als ontologiespezifische Metadaten extrahiert und über die Auswertungseinheit des Spezifikationsmoduls 32 mit Hilfe des statistischen Verfahrens analysiert. Als statistisches Verfahren wird eine Häufigkeitsanalyse eingesetzt. Das Ergebnis der im Spezifikationsmodul 32 durchgeführten Häufigkeitsanalyse stellt sich im Beispiel wie folgt dar:
Wirtschaft/Steuern/Aufkommen (3)
Wirtschaft/Steuern/Moral (1)
Wirtschaft/Steuern/Flucht (1).

Die Heuristik bietet dem Nutzer verschiedene Einsichten, da die Bezüge der Wissensdomäne transparent gemacht werden, und die so die weitere Suche anleiten können:
- Der Typus "Wirtschaft/Steuern/Aufkommen" ist für das Suchwort "Steuerschätzung" von hoher Relevanz;
- zwei weitere Typen (hier Themen) sind für das Problem des Steueraufkommens relevant;
- es besteht eine Verbindung zwischen dem Thema Steueraufkommen und dem Thema Steuerflucht, denn offensichtlich vermindert Steuerflucht das Steueraufkommen;
- in einem größeren Archiv gäbe es für den Suchwert "Wirtschaft/Steuern/Aufkommen" möglicherweise weitere interessante (spezifische) Dokumente (d.h. Artikel zum Thema Steuerschätzung), die in der mit dem Suchwert "Steuerschätzung" erzeugten Treffermenge noch gar nicht enthalten sind.

Durch den Einsatz des erfindungsgemäßen Spezifikationsmodul 32 wird erreicht, dass automatisch Vorschläge für die Präzisierung der Suchanfragen angezeigt werden. Schon nach dem ersten Spezifikationsschritt gewinnt eine durch Elemente der Heuristik ergänzte Suchanfrage entscheidend an Relevanz. Das Rekursionsmodul 33 übergibt die signifikanten Suchwerte (hier Metadaten (Typ 2)) erfindungsgemäß zurück an das Suchmodul 31. Die Spezifikation kann dann so lange wiederholt werden, bis die Suchanfrage angemessen verfeinert ist bzw. bis ein signifikantes Ergebnis bzw. eine Abbruchbedingung erreicht ist (Feedbackschleife B).

Der Pfiff der Erfindung liegt nicht nur darin, die Trefferliste einer konventionellen Archivsuche als Zwischenschritt für eine Auswertung heranzuziehen, sondern resultiert vor allem daraus, dass die Auswertung mit Hilfe eines Spezifikationsmodul 32 realisiert wird, das die Auswertung ontologiespezifischer Metadaten garantiert (hier der Metadaten (Typ 2), also eine Auswertung der Typusdaten/Ausprägungen im Segment <Typus>). Die Verwendung ontologiespezifischer Metadaten ermöglicht es, semantisch relevante Hypothesen zu formulieren, im Beispiel eine Heuristik relevanter Themen, die - über das Rekursionsmodul 33 - einem Nutzer zur sukzessiven Verfeinerung seiner Abfrage vorgeschlagen werden. Die automatisierte Evaluierung der Hypothesen über Signifikanztest durch das Rekursionsmodul 33 ist in der schematischen Darstellung zunächst ausgespart. Es soll hier vor allem deutlich werden, dass das Spezifikationsmodul 32 und das Rekursionsmodul 33 - unter der Bedingung der richtigen technischen Spezifikation der Parameter der Feedbackschleife - einen "Inferenzmechnismus" bilden, der dem Nutzer eines elektronischen Archivs, das über eine Wissensbasis mit fachlich erschlossenen Dokumenten verfügt, sehr weitgehende Unterstützung bietet. Besonders, soweit im Rahmen des erfindungsgemäßen Archivsystems - über das Erschließungsmoduls 5 - eine konsistente übergeordneter Speicherorganisation garantiert ist, d. h. die semantische Relevanz der Wissensbasis explizit kontrolliert wird. Über das Spezifikationsmodul 32 und das Rekursionsmodul 33 werden - im Erschließungsmodus - zugleich semantisch signifikante Vorgaben für die Erschließung generiert.

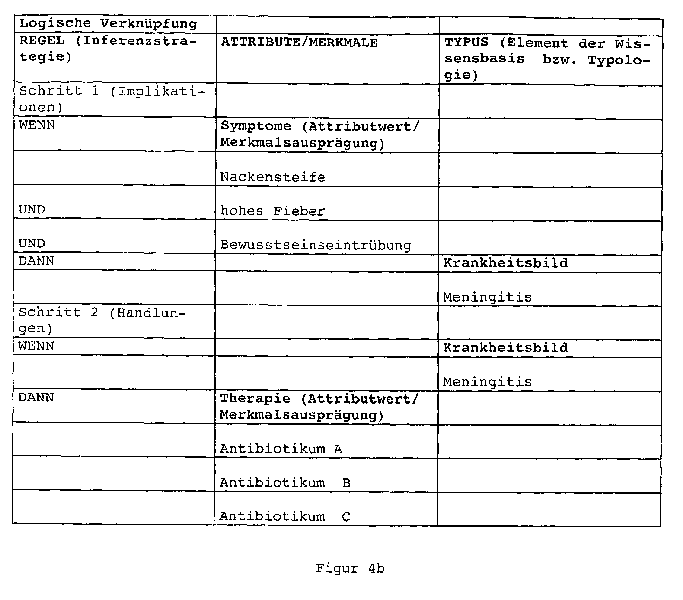

Fig. 4b zeigt die wesentlichen Merkmale eines dem Stand der Technik entsprechenden regelbasierten Expertensystems: jedem Krankheitsbild einer medizinischen Typologie werden regelbasiert Attribute (Symptome oder Therapien) zugeordnet. Entsprechend den Attributwerten (z. B. Nackensteife, Fieber usw.) erfolgt dann eine eindeutige Zuweisung von Symptomen auf Krankheitsbilder und später von Krankheitsbildern auf Therapien (vgl. Georg Marckmann, Diagnose per Computer?, Deutscher Ärzte-Verlag 2003, Seite 44 ff.).

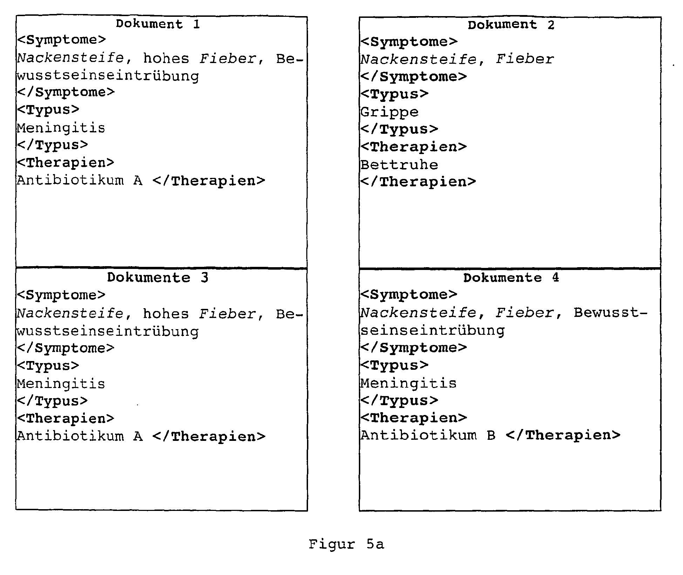

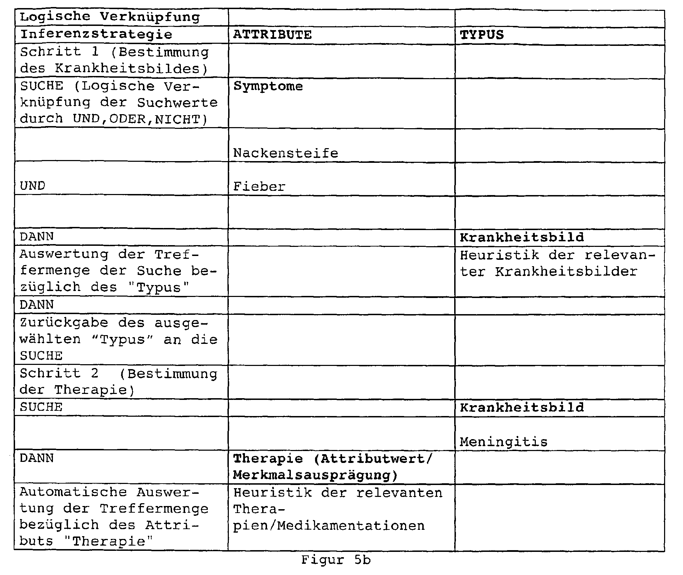

In Fig. 5a ist eine strukturierte/formalisierte Dokumentation der medizinischen Wissenspraxis (das Erschließungsmodul 5 organisiert im Wissensprozess den Aufbau der Wissensbasis, des elektronischen Archivs), dargestellt; Fig. 5b zeigt beispielhaft wie die kollektive (typologiebasierte) Wissenspraxis über das Spezifikationsmodul 32 rekonstruiert wird. Die schematische Darstellung verdeutlicht die Leistungsfähigkeit der Erfindung für die Konzeption eines medizinischen Expertensystems.

Fig. 5a zeigt vier fachlich erschlossene Dokumente eines elektronischen Archivs, das eine medizinische Typologie repräsentiert. Die Dokumente 1, 2, 3, 4 enthalten jeweils die Segmente <Typus>, für Metadaten (Typ 2), hier können prinzipiell alle, fachlich angemessenen und gemäß einer zugrunde liegenden medizinischen Typologie zugelassenen Krankheitsbilder eingetragen werden. Die Segmente <Symptome> und <Therapien> ermöglichen die Eingabe der für ein Krankheitsbild relevanten Symptome und Therapien. Im Beispielarchiv sind entsprechende Merkmalsausprägungen realisiert.

Fig. 5b zeigt, dass die starren Regeln des regelbasierten Expertensystems, wie sie in Fig. 4b dargestellt sind, erfindungsgemäß in nicht-starrer Weise, durch die in der Wissensbasis dokumentierte praktisch Anwendung der medizinischen Typologie, durch die dokumentierte faktische Regelanwendung in der Wissenspraxis (von Medizinern) substituiert wird. Durch eine Abfrage wird mit Hilfe des Spezifikationsmoduls 32 die Wissensbasis inferiert (Fig. 5b), so dass mit Hilfe der Erfindung Heuristiken erzeugt werden können.

Wendet man die in Fig. 5b vorgestellte Verfahrensweise auf die in Fig. 5a dargestellten Beispieldokumente an, wird für die Symptome "Fieber" und "Nackensteife" eine Heuristik der relevanten Krankheitsbilder angezeigt: das Krankheitsbild "Meningitis" wurde dreimal und das Krankheitsbild "Grippe" einmal diagnostiziert. Auf Basis der bisherigen diagnostischen Praxis wird dem Nutzer eine hohe Relevanz der Diagnose "Meningitis" (75% der Fälle) und eine eher geringe Relevanz der Diagnose Grippe (25% der Fälle) angezeigt.

### Die Heuristiken

Eine Heuristik der für die Symptome "Fieber" und "Nackensteife" relevanten Krankheitsbilder:

| Krankheitsbilder | Relevanz der Krankheitsbilder abgeleitet aus allen für die Symptome "Fieber" und "Nackensteife" dokumentierten Diagnosen |
|---|---|
| Meningitis | 3 (75%) |
| Grippe | 1 (25%) |

Eine Heuristik der für das Krankheitsbild "Meningitis" relevanten Therapien/Medikamentationen:

| Therapien/Medikamentation | Relevanz der Therapien/Medikamentationen abgeleitet aus allen für das Krankheitsbild "Meningitis" dokumentierten Verschreibungen |
|---|---|
| Antibiotikum A | 2 (67%) |
| Antibiotikum B | 1 (33%) |

Hier zeigt sich eine wesentliche Stärke des erfindungsgemäßen Archivsystems: Die faktische diagnostische Praxis eines Benutzerkreises kann transparent rekonstruiert werden. D.h. das Archivsystem kann, unter den genannten Bedingungen, jede Wissenspraxis repräsentieren und verfeinern. Denn je besser die repräsentierte Wissenspraxis, desto besser können, vermittelt über die Wissensbasis, die mit Hilfe der Erfindung erzeugten Lösungsvorschläge die Wissenspraxis, den Umgang mit fachlichem Wissen einer Wissensdomäne anleiten.

Im Beispiel erweist sich die Flexibilität des Rekursionsmodul 33 als weiterer Vorteil, da es die Übergabe der Suchwerte in den jeweils relevanten Modus garantiert. So kann ein aus der Heuristik ausgewähltes Krankheitsbild automatisch als Suchwert im Modus "Therapie/Medikamentation" eingesetzt werden. Im Beispiel wurde durch einen Benutzereingriff, das Krankheitsbild "Meningitis" gewählt bzw. diagnostiziert und im Anschluss gleich eine Heuristik möglicher Therapien/Medikamentationen generiert. Die Heuristik zeigt dem Nutzer, dass bei einer Diagnose "Meningitis" in 67% der Fälle das "Antibiotikum A" und 33% der Fälle das "Antibiotikum B" gewählt wurde. Die Erfindung bietet dem Nutzer also wesentliche Empfehlungen und Entscheidungshilfen, indem alle möglichen Krankheitsbilder bzw. Therapien/Medikamentationen aufzeigt werden, die zugleich mit Hilfe aussagefähigen statistischer Kennzahlen gewichtet sind. Das ganze Spektrum alternativer Krankheitsbilder bzw. Behandlungsformen wird in seiner spezifischen Relevanz transparent.

Die vorhergehenden Beispiele verdeutlichen das logische Prinzip, auf dem die Erfindung basiert. Der damit verbundene Auswertungsaufwand steigt bei großen Dokumentmengen exponential. Das Prinzip lässt sich nur dann effizient nutzen, wenn die verschiedenen Auswertungsschritte automatisiert werden. Die Leistung der Erfindung liegt darin, die vorgeschlagenen Auswertungsschritte über die Recheneinheit 3 eines Computers zu automatisieren.

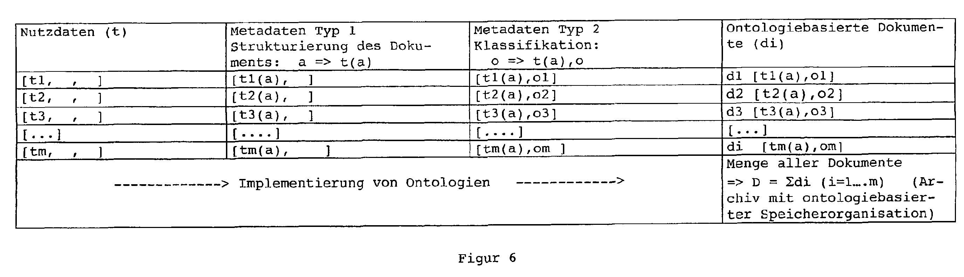

Um die Leistungsfähigkeit der Erfindung im Kontext der komplexen Struktur elektronischer Archive noch einmal zu verdeutlichen, wird in Fig. 6 der formale Aufbau eines elektronischen Archivs kurz skizziert. Angeführt sind wesentliche Elemente einer ontologiebasierten Speicherorganisation. Die Nutzdaten sind zunächst mit Hilfe eines vorgegebenen Dokumentformats (DTD) zu strukturieren (Annotation mit Metadaten Typ 1), und werden dann, anhand vorgegebener Ontologien, die relevante Fachgebiete repräsentieren, klassifiziert (Annotation mit Metadaten Typ 2). Die Klassifikation wird im erfindungsgemäßen Archivsystem über den Erschließungsmodus automatisiert (Feedbackschleife C). Dazu ist ein Erschließungsmodul 5 vorgesehen. Die klassifizierten Dokumente wandern in den Speicher 4, wo die Summe der klassifizierten Dokumente die Struktur des Archivs bzw. die Wissensbasis repräsentieren. Um die Dokumente des Archivs im Speicher aufzufinden, werden sie zusätzlich indiziert. Das Abspeichern, die Indizierung und die Abfrage der Dokumente kann zunächst mit Hilfe konventioneller Datenbanktechnologien erfolgen. Bedingung ist dabei immer, dass die Dokumente als logische Einheit verfügbar und behandelbar sind. Über das Suchmodul 31 kann so, anhand des Index, der Zugriff auf die Dokumente organisiert werden.

Die Treffermenge einer Archivsuche lässt sich also angeben, als eine Untermenge der Menge aller Dokumente des Archivs, wie sie in einer ersten Abfrage durch die Suchwerte (t(a)(t),o(t)) bestimmt wird: (E(t) - D (t(a)(t),o(t)). Die Dokumente der Treffermenge (E(t)) können dabei Ausprägungen von Suchwerten enthalten, in Form von Nutzdaten (t), von Metadaten Typ 1 (a) oder von Metadaten vom Typ 2 (o). Die vom Suchmodul 31 ermittelte Treffermenge ist erfindungsgemäß ein Zwischenschritt für die weitere Spezifikation der Abfrage und zwar so, dass die Treffermenge (E(t)) an das Spezifikationsmodul 32 übergeben wird, wo die ontologiebasierten Metadaten Typ 2 (o(t)), mittels mindestens eines Prüfkriteriums identifiziert werden (bei der erfindungsgemäßen Abfrageeinrichtung ist an dieser Stelle eine weitere Feedbackschleife zur Bestimmung signifikanter Ontologien vorgesehen (Feedbackschleife A)). Sind die signifikanten Ontologien bestimmt, werden die ontologiespezifischen Metadaten - hier Metadaten vom Typ 2 - in Abhängigkeit von der ersten Treffermenge extrahiert (o(t)/E(t)). Die Metadaten werden als Metadatenmatrix (ox(t)/Doc 1, oy(t)/Doc 2, ....oz(t)/Doc n) ausgegeben und mittels eines statistischen Verfahrens analysiert. Die Ausprägungsliste der Metadaten wird an das Rekursionsmodul 33 übergeben und als eine Heuristik semantisch relevanter Hypothesen zur Lösung des jeweilige Suchproblems H(o(t)) dargestellt. Über das Rekursionsmodul 33 wird dann die Signifikanz der Hypothesen evaluiert und signifikante Hypothesen bzw. die entsprechenden Metadaten vom Typ 2 (o(t+1)) an das Suchmodul 31 zurück übermittelt (Feedbackschleife B).

Das Ergebnis der anschließenden Suche lässt sich - soweit die Suche nicht anderweitig modifiziert wurde - darstellen als: E(t+1) = D (t(a)(t),o(t),o(t+1)). D.h. Die Abfrage wird hier in der ersten Feedbackschleife durch weitere für das Suchproblem signifikante Metadaten vom Typ 2 (o(t+1)) ergänzt. Weitere Umläufe lassen sich anschließen, bis die Abfrage hinreichend spezifiziert ist (E(t+2)= D (,t(a)(t),o(t),o(t+1), o(t+2))usw.).

Zusammenfassend seien noch einmal die Vorteile der Erfindung dargestellt.

Die Erfindung ermöglicht es, eine Abfrageeinrichtung so zu konfigurieren, dass für eine Abfrage in einem ersten Schritt ontologiebasierte Metadaten und signifikante Ontologien identifiziert werden (Feedbackschleife A) und in einem zweiten Schritt durch das Zusammenspiel von Spezifikationsmodul 32 und Rekursionsmodul 33 signifikante ontologiespezifische Metadaten ermittelt werden (Feedbackschleife B). Dadurch wird die semantische Signifikanz der Abfrageergebnisse entscheidend erhöht.

Die Abfragen gemäß der Erfindung sind prinzipiell in allen elektronischen Archiven einsetzbar, insbesondere ist es aber ermöglicht, durch die Ausbildung eines entsprechenden Erschließungsmodul 5, avancierte elektronische Archive mit homogener Systemarchitektur für verschiedene Wissensdomänen zu implementieren (Feedbackschleife C). Insbesondere unter der Voraussetzung einer homogenen Systemarchitektur und einer fachlich erschlossenen Wissensbasis, liefert es Lösungsvorschläge für Probleme der jeweiligen Wissensdomäne, die von hoher Signifikanz sind (Feedbackschleife B rückbezogen auf eine Speicherorganisation basierend auf Feedbackschleife C).

Die Erfindung ermöglicht, die kollektive Wissenspraxis eines Benutzerkreises transparent zu machen, und zwar insoweit sie sich auf ein vom Benutzerkreis geteiltes konzeptionelles Schema, auf Ontologien bezieht und die Wissenspraxis kontinuierlich dokumentiert wird, also in Form spezieller, auf den Problembereich zugeschnittener Dokumentformate im erfindungsgemäßen Archivsystem archiviert wird. Der Benutzerkreis protokolliert seine Wissenspraxis, seinen Umgang mit dem Wissen einer Wissensdomäne und kann dadurch, indem er die Wissensbasis dann abfragt, vom gesammelten "Know How" profitieren. Die erfindungsgemäßen Feedbackschleifen bilden hierbei einen Inferenzmechanismus für die Wissensbasis.

Das erfindungsgemäße Archivsystem ermöglicht es damit, ein elektronisches Archivsystem sozusagen selbststeuernd auszubilden, und zwar in einem voreinstellbaren Grad. Selbststeuernd umfasst hierbei eine Selbststeuerung der Abfrage und eine Selbststeuerung der Erschließung bzw. Klassifikation. Dadurch wird ein automatisiertes Archiv gebildet.

## Patentansprüche

1. Abfrageeinrichtung mit einer Eingabe- und einer Ausgabeeinheit (1, 2) sowie einer Recheneinheit (3) zum Zusammenwirken mit einem Speicher (4),
wobei die Recheneinheit (3) ausgebildet ist zum Zugreifen auf eine Menge von Dokumenten in dem Speicher (4), die gegliedert sind in Nutzdaten und Metadaten,
wobei die Recheneinheit (3) zur Datenverarbeitung ausgebildet ist und ein Suchmodul (31) aufweist, um zur Lösung eines Suchproblems in der Menge von Dokumenten mit den oben beschriebenen Eigenschaften anhand von Suchwerten eine Treffermenge mit Ausprägungen der Suchwerte zu generieren,
**dadurch gekennzeichnet, dass**
die Recheneinheit (3) zusätzlich zum Suchmodul (31) ein Spezifikationsmodul (32) mit einer Beobachtungseinheit sowie einer Auswertungseinheit und ein Rekursionsmodul (33) umfasst, und dazu ausgebildet ist, in zwei Betriebsarten betrieben zu werden, einer ersten für unspezifische Metadaten und einer zweiten für ontologiespezifische Metadaten,
die Beobachtungseinheit dazu ausgebildet ist, zuerst in der ersten Betriebsart
die mit dem Suchmodul (31) ermittelte Treffermenge zu übernehmen und in einem ersten Schritt über mindestens ein Prüfkriterium zu bestimmen, ob die in den Dokumenten der Treffermenge enthaltenen Metadaten ontologiebasiert sind, und soweit vorhanden, die zugehörigen Ontologien anzugeben und in einem zweiten Schritt für die Suchanfrage signifikante Ontologien auszuwählen und
entweder, bei unspezifischen Metadaten, die Treffermenge Ohne expliziten Bezug auf eine Ontologie dem Nutzer zur Verfügung zu stellen,
oder, wenn signifikante Ontologien ausgewählt sind, in die zweite Betriebsart für die ontologiespezifischen Metadaten zu wechseln, abhängig von den ausgewählten Ontologien die ontologiespezifischen Metadaten zu extrahieren und sie für die Dokumente als Metadatenmatrix auszugeben,
die Auswertungseinheit dazu ausgebildet ist, die Metadatenmatrix mittels eines voreinstellbaren statistischen Verfahrens zu analysieren und eine Ausprägungsliste der Metadaten auszugeben und
das Rekursionsmodul (33) in der zweiten Betriebsart betätigt ist, wobei das Rekursionsmodul (33) eine Evaluierungseinheit, die dazu ausgebildet ist, Metadaten aus der Ausprägungsliste als Hypothesen für die Lösung des jeweiligen Suchproblems anzugeben und diese einem Nutzer vorzuschlagen oder Signifikanztests automatisch zu unterziehen, und eine Auswahleinheit umfasst, die dazu ausgebildet ist, die signifikantesten Hypothesen herauszugreifen und als Suchwerte an das Suchmodul (31) zur Wiederholung zu übergeben, bis ein Abbruchsignal angelegt ist.

2. Abfrageeinrichtung nach Anspruch 1,
**dadurch gekennzeichnet, dass**
in der Beobachtungseinheit das mindestens eine Prüfkriterium für ontologiebasierte Metadaten statisch, insbesondere durch einen Benutzer vorgebbar, ist.

3. Abfrageeinrichtung nach Anspruch 1,
**dadurch gekennzeichnet, dass**
in der Beobachtungseinheit das mindestens eine Prüfkriterium für ontologiebasierte Metadaten dynamisch mittels einer Generatorentität erzeugt ist.

4. Abfrageeinrichtung nach Anspruch 3,
**dadurch gekennzeichnet, dass**
die Generatorentität dazu ausgebildet ist, das mindestens eine Prüfkriterium aus einem Pool vorgespeicherter Ontologien, durch eine dynamische Benutzeingabe oder aus einer externen Quelle zu gewinnen oder Prüfontologien, die aus denselben Quellen gewonnen werden, als Prüfkriterien einzusetzen.

5. Abfrageeinrichtung nach einem der Ansprüche 2 bis 4,
**dadurch gekennzeichnet, dass**
die Beobachtungseinheit vorzugsweise mit einer Ausgabe/Eingabeeinheit verbunden und derart ausgebildet ist, dass eine Benutzereingabe zur Feinauswahl signifikanter Ontologien vorgesehen ist oder signifikante Ontologien anhand vorgebbarer Prüfbedingung ausgewählt werden.

6. Abfrageeinrichtung nach einem der Ansprüche 1 bis 5,
**dadurch gekennzeichnet ist, dass**
sobald signifikante Ontologien gewählt sind, automatisch in die Betriebsart für ontologiespezifische Metadaten gewechselt wird und in Bezug auf gewählte Ontologien, ontologiespezifische Metadaten extrahiert werden.

7. Abfrageeinrichtung nach einem der vorangehenden Ansprüche,
**dadurch gekennzeichnet, dass**
die Evaluierungseinheit ein Scoring-Modul zur Bewertung der Signifikanz von mehreren der Hypothesen mittels vorgebbarer Prüfbedingungen aufweist.

8. Abfrageeinrichtung nach Anspruch 7,
**dadurch gekennzeichnet, dass**
das Scoring-Modul zur Gewinnung einer Maßzahl für die Signifikanz jeder der zu bewertenden Hypothesen ausgebildet ist.

9. Abfrageeinrichtung nach Anspruch 7 oder 8,
**dadurch gekennzeichnet, dass**
die Auswahleinheit einen Selektor aufweist, der dazu ausgebildet ist, aus den Hypothesen an Hand ihrer Bewertung eine signifikante Hypothese auszuwählen.

10. Abfrageeinrichtung nach Anspruch 9,
**dadurch gekennzeichnet, dass**
der Selektor dazu ausgebildet ist, die Hypothese mit der höchsten Bewertung, also die signifikanteste Hypothese, an das Suchmodul zurückzuführen.

11. Abfrageeinrichtung nach einem der Ansprüche 1 bis 10,
**dadurch gekennzeichnet, dass**
das Rekursionsmodul zur Überwachung einer Abbruchbedingung ausgebildet ist.

12. Abfrageeinrichtung nach einem der Ansprüche 1 bis 11,
**dadurch gekennzeichnet, dass**
zur Bildung eines Systems für ein elektronisches Archiv ein Erschließungsmodul (5) vorgesehen ist, das zur Organisation der Dokumente im Speicher (4) mit einer ontologiebasierten Speicherorganisation ausgebildet ist, bei der die Ontologien vorgegeben sind, und die auf Metadaten basiert, und zur Erschließung der einzuspeichernden Dokumente eine Selektionskomponente und eine Klassifikationskomponente aufweist,
wobei das Erschließungsmodul (5) so mit dem Spezifikationsmodul (32) zusammenwirkt, dass im Erschließungsmodus eine mit dem Erschließungsmodul oder Suchmodul ermittelte Vergleichsmenge übernommen wird und die mit den Dokumenten der jeweiligen Menge verbundenen Metadaten mittels des mindestens eines Prüfkriteriums daraufhin geprüft werden, welche Metadaten mit vorgegebenen Ontologien übereinstimmen, die der internen Speicherorganisation des Archivs zugrunde liegen.

13. Abfrageeinrichtung nach Anspruch 12,
**dadurch gekennzeichnet, dass**
die Selektionskomponente derart ausgebildet ist, für zu erschließende Dokumente Maßzahlen für die Relevanz und Signifikanz zu ermitteln, und an Hand der Maßzahlen relevante wie signifikante Dokumente an die Klassifikationskomponente zu übermitteln.

14. Abfrageeinrichtung nach Anspruch 12 oder 13,
**dadurch gekennzeichnet, dass**
die Klassifikationskomponente dazu ausgebildet ist, für jedes von der Selektionskomponente übermittelte Dokument, ein Vorgabekriterium für die Klassifikation desselben zu ermitteln.

15. Abfrageeinrichtung nach Anspruch 14,
**dadurch gekennzeichnet, dass**
die Klassifikationskomponente eine Bearbeitungseinheit aufweist, die mit einer Eingabe-/Ausgabeeinrichtung (1,2) verbunden und derart ausgebildet ist, um durch den Benutzer mittels eines Drag-and-Drop-Eingriffs relevante Suchwerte aus den zu erschließenden Dokumenten zu extrahieren und diese als das Vorgabekriterium an das Suchmodul (31) zu übermitteln, um die Vergleichsmenge zu generieren.

16. Abfrageeinrichtung nach Anspruch 14 oder 15,
**dadurch gekennzeichnet, dass**
die Klassifikationskomponente eine Auswertungseinheit aufweist, die dazu ausgebildet ist, mittels eines statistischen Verfahrens signifikante Suchwerte aus den zu erschließenden Dokumenten herauszugreifen und als das Vorgabekriterium an das Suchmodul (31) zu übermitteln, um die Vergleichsmenge zu generieren.

17. Abfrageeinrichtung nach Anspruch 14 oder 15,
**dadurch gekennzeichnet, dass**
die Klassifikationskomponente eine Auswertungseinheit aufweist, die dazu ausgebildet ist, mittels eines statistischen Verfahrens ein Profil des zu erschließenden Dokuments zu erzeugen, mit Profilen bereits erschlossener Dokumente zu vergleichen und die ähnlichsten Dokumente zusammen eine Vergleichsmenge bilden, die als Vorgabekriterium direkt an das Spezifikationsmodul (32) übermittelt wird.

18. Abfrageeinrichtung nach einem der Ansprüche 12 bis 17,
**dadurch gekennzeichnet, dass**
die über das Spezifikationsmodul (32) und das Rekursionsmodul (33) mit Hilfe des Vorgabekriteriums ermittelten signifikanten Hypothesen zur Lösung des Suchproblems nach Erreichen einer Abbruchbedingung an das Erschließungsmodul (5) zurück übermittelt und die entsprechenden ontologiespezifischen Metadaten einem Benutzer über eine Eingabe-/Ausgabeeinheit(1,2) zur Auswahl vorgeschlagen oder automatisch mit den Dokumenten verknüpft werden.

## Claims

1. Interrogation device having an input unit (1) and an output unit (2) as well as a computation unit (3) for interacting with a memory (4),
the computation unit (3) being designed to access a set of documents in the memory (4) which have been subdivided into useful data and meta data,
the computation unit (3) being designed to process data and having a search module (31) in order to use search values to generate a hit list containing characteristics of the search values for the purpose of solving a search problem in the set of documents having the properties described above,
**characterized in that**,
in addition to the search module (31), the computation unit (3) comprises a specification module (32) having an observation unit and an analysis unit, and a recursion module (33), and is designed to be operated in two operating modes, a first operating mode for nonspecific meta data and a second operating mode for ontology-specific meta data,
the observation unit is designed to first of all adopt the hit list determined using the search module (31) in the first operating mode and to use at least one test criterion in a first step to determine whether the meta data contained in the documents in the hit list are ontology-based and, if present, to specify the associated ontologies and to select ontologies which are significant to the search query in a second step, and
either to provide the user with the hit list without explicit reference to an ontology in the case of nonspecific meta data or, if significant ontologies are selected, to change to the second operating mode for the ontology-specific meta data, to extract the ontology-specific meta data on the basis of the selected ontologies and to output said meta data for the documents in the form of a meta data matrix,
the analysis unit is designed to analyse the meta data matrix using a statistical method which can be preset and to output a list of characteristics of the meta data, and
the recursion module (33) is actuated in the second operating mode, the recursion module (33) comprising an evaluation unit, which is designed to specify meta data from the list of characteristics as hypotheses for solving the respective search problem and to propose said meta data to a user or to automatically subject said meta data to significance tests, and a selection unit which is designed to pick the most significant hypotheses and to transfer them as search values to the search module (31) for repetition until an abort signal is applied.

2. Interrogation device according to Claim 1,
**characterized in that**
the at least one test criterion for ontology-based meta data is static, in particular can be predefined by a user, in the observation unit.

3. Interrogation device according to Claim 1,
**characterized in that**
the at least one test criterion for ontology-based meta data is dynamically generated in the observation unit using a generator entity.

4. Interrogation device according to Claim 3,
**characterized in that**
the generator entity is designed to obtain the at least one test criterion from a pool of prestored ontologies by means of a dynamic user input or from an external source or to use, as test criteria, test ontologies which are obtained from the same sources.

5. Interrogation device according to one of Claims 2 to 4,
**characterized in that**
the observation unit is preferably connected to an output/input unit and is designed in such a manner that a user input for fine selection of significant ontologies is provided or significant ontologies are selected using a predefinable test condition.

6. Interrogation device according to one of Claims 1 to 5,
**characterized in that**,
as soon as significant ontologies are selected, the process automatically changes to the operating mode for ontology-specific meta data and ontology-specific meta data are extracted with respect to selected ontologies.

7. Interrogation device according to one of the preceding claims,
**characterized in that**
the evaluation unit has a scoring module for rating the significance of a plurality of the hypotheses using predefinable test conditions.

8. Interrogation device according to Claim 7,
**characterized in that**
the scoring module is designed to obtain a measure of the significance of each of the hypotheses to be rated.

9. Interrogation device according to Claim 7 or 8,
**characterized in that**
the selection unit has a selector which is designed to select a significant hypothesis from the hypotheses using the rating of the latter.

10. Interrogation device according to Claim 9,
**characterized in that**
the selector is designed to feed the hypothesis with the highest rating, that is to say the most significant hypothesis, back to the search module.

11. Interrogation device according to one of Claims 1 to 10,
**characterized in that**
the recursion module is designed to monitor an abort condition.

12. Interrogation device according to one of Claims 1 to 11,
**characterized in that**
an indexing module (5) is provided for the purpose of forming a system for an electronic archive, said module being designed to organize the documents in the memory (4) with an ontology-based memory organization, in which the ontologies are predefined and which is based on meta data, and having a selection component and a classification component for indexing the documents to be stored,
the indexing module (5) interacting with the specification module (32) in such a manner that a comparison set determined using the indexing module or search module is adopted in the indexing mode and the at least one test criterion is used to test the meta data associated with the documents in the respective set in order to determine which meta data correspond to predefined ontologies on which the internal memory organization of the archive is based.

13. Interrogation device according to Claim 12,
**characterized in that**
the selection component is designed to determine measures of the relevance and significance for documents to be indexed and to use the measures to transmit relevant and significant documents to the classification component.

14. Interrogation device according to Claim 12 or 13,
**characterized in that**
the classification component is designed to determine, for each document transmitted by the selection component, a stipulation criterion for classifying said document.

15. Interrogation device according to Claim 14,
**characterized in that**
the classification component has a processing unit which is connected to an input/output device (1, 2) and is designed for the user to extract relevant search values from the documents to be indexed using a drag-and-drop action and to transmit said search values to the search module (31) as the stipulation criterion in order to generate the comparison set.

16. Interrogation device according to Claim 14 or 15,
**characterized in that**
the classification component has an analysis unit which is designed to use a statistical method to pick significant search values from the documents to be indexed and to transmit said search values to the search module (31) as the stipulation criterion in order to generate the comparison set.

17. Interrogation device according to Claim 14 or 15,
**characterized in that**
the classification component has an analysis unit which is designed to use a statistical method to generate a profile of the document to be indexed and to compare said profile with profiles of documents which have already been indexed, and the most similar documents together form a comparison set which is directly transmitted to the specification module (32) as the stipulation criterion.

18. Interrogation device according to one of Claims 12 to 17,
**characterized in that**
the significant hypotheses for solving the search problem which have been determined using the specification module (32) and the recursion module (33) with the aid of the stipulation criterion are transmitted back to the indexing module (5) after an abort condition has been reached, and the corresponding ontology-specific meta data are proposed to a user for selection via an input/output unit (1, 2) or are automatically linked to the documents.

## Revendications

1. Dispositif d'interrogation, comprenant une unité d'entrée et une unité de sortie (1, 2), ainsi qu'une unité arithmétique (3) destinée à coopérer avec une mémoire (4),
dans lequel l'unité arithmétique (3) est réalisée pour accéder à un ensemble de documents dans la mémoire (4), qui sont organisés en données utiles et métadonnées,
dans lequel l'unité arithmétique (3) est réalisée pour le traitement de données et présente un module de recherche (31) afin de générer à l'aide de valeurs de recherche, en vue de résoudre un problème de recherche parmi l'ensemble de documents ayant les propriétés décrites ci-dessus, un ensemble cible avec des manifestations des valeurs de recherche,
**caractérisé en ce que**
l'unité arithmétique (3) comprend en plus du module de recherche (31) un module de spécification (32) avec une unité d'observation, ainsi qu'une unité d'évaluation et un module de récurrence (33), et est réalisée de façon à fonctionner dans deux modes de fonctionnement, un premier pour des métadonnées non spécifiques et un deuxième pour des métadonnées spécifiques à l'ontologie,
l'unité d'observation est réalisée pour reprendre d'abord dans le premier mode de fonctionnement l'ensemble cible déterminé à l'aide du module de recherche (31), et dans une première étape, déterminer par au moins un critère de contrôle si les métadonnées contenues dans les documents de l'ensemble cible sont basées sur l'ontologie, et indiquer, le cas échéant, les ontologies associées, et dans une deuxième étape, sélectionner des ontologies significatives pour la requête de recherche, et
soit, dans le cas de métadonnées non spécifiques, fournir à l'utilisateur l'ensemble cible sans référence explicite à une ontologie,
soit, lorsque des ontologies significatives ont été sélectionnées, passer au deuxième mode de fonctionnement pour les métadonnées spécifiques à l'ontologie, extraire les métadonnées spécifiques à l'ontologie en fonction des ontologies sélectionnées, et les délivrer pour les documents sous forme de matrice de métadonnées,
l'unité d'évaluation est réalisée pour analyser la matrice de métadonnées au moyen d'un procédé statistique préréglable et délivrer une liste de manifestions des métadonnées, et
le module de récurrence (33) est actionné dans le deuxième mode de fonctionnement, le module de récurrence (33) comprenant une unité d'évaluation réalisée pour indiquer des métadonnées issues de la liste de manifestations comme hypothèses pour la solution du problème de recherche respectif et pour les proposer à un utilisateur ou les soumettre automatiquement à des tests de significativité, et une unité de sélection réalisée pour prélever les hypothèses les plus significatives et les transférer sous forme de valeurs de recherche au module de recherche (31) pour itération jusqu'à ce qu'un signal d'annulation soit appliqué.

2. Dispositif d'interrogation selon la revendication 1, **caractérisé en ce que** dans l'unité d'observation, ledit au moins un critère de contrôle pour des métadonnées basées sur l'ontologie peut être prédéfini de façon statique, en particulier par un utilisateur.

3. Dispositif d'interrogation selon la revendication 1, **caractérisé en ce que** dans l'unité d'observation, ledit au moins un critère de contrôle pour des métadonnées basées sur l'ontologie est généré de façon dynamique au moyen d'une entité génératrice.

4. Dispositif d'interrogation selon la revendication 3, **caractérisé en ce que** l'entité génératrice est réalisée pour obtenir ledit au moins un critère de contrôle à partir d'une réserve d'ontologies pré-mémorisées, d'une entrée utilisateur dynamique ou d'une source externe, ou pour mettre en oeuvre comme critères de contrôle des ontologies de contrôle obtenues à partir des mêmes sources.

5. Dispositif d'interrogation selon l'une quelconque des revendications 2 à 4, **caractérisé en ce que** l'unité d'observation est reliée de préférence à une unité d'entrée/sortie et réalisée de telle sorte qu'une entrée utilisateur est prévue pour la sélection précise d'ontologies significatives, ou que des ontologies significatives sont sélectionnées à l'aide d'une condition de contrôle prédéfinissable.

6. Dispositif d'interrogation selon l'une quelconque des revendications 1 à 5, **caractérisé en ce que** dès que des ontologies significatives ont été choisies, on passe automatiquement au mode de fonctionnement pour des métadonnées spécifiques à l'ontologie, et que concernant les ontologies choisies, des métadonnées spécifiques à l'ontologie sont extraites.

7. Dispositif d'interrogation selon l'une quelconque des revendications précédentes, **caractérisé en ce que** l'unité d'évaluation présente un module de pénalisation pour évaluer la significativité de plusieurs des hypothèses au moyen de conditions de contrôle prédéfinissables.

8. Dispositif d'interrogation selon la revendication 7, **caractérisé en ce que** le module de pénalisation est réalisé pour obtenir un indice de la significativité de chacune des hypothèses à évaluer.

9. Dispositif d'interrogation selon la revendication 7 ou 8, **caractérisé en ce que** l'unité de sélection présente un sélecteur qui est réalisé pour sélectionner parmi les hypothèses une hypothèse significative à l'aide de son évaluation.

10. Dispositif d'interrogation selon la revendication 9, **caractérisé en ce que** le sélecteur est réalisé pour ramener au module de recherche l'hypothèse avec l'évaluation la plus élevée, donc l'hypothèse la plus significative.

11. Dispositif d'interrogation selon l'une quelconque des revendications 1 à 10, dans lequel le module de récurrence est réalisé pour surveiller une condition d'annulation.

12. Dispositif d'interrogation selon l'une quelconque des revendications 1 à 11, **caractérisé en ce que**
pour constituer un système pour des archives électroniques, un module d'interprétation (5) est prévu qui est réalisé pour organiser les documents dans la mémoire (4) selon une organisation de mémoire basée sur l'ontologie, dans laquelle les ontologies sont prédéfinies, et qui est basée sur des métadonnées, et qui présente pour l'interprétation des documents à mettre en mémoire une composante de sélection et une composante de classification,
le module d'interprétation (5) coopérant avec le module de spécification (32) de telle sorte que dans le mode d'interprétation, un ensemble comparatif déterminé par le module d'interprétation ou le module de recherche est repris, et les métadonnées reliées aux documents de l'ensemble respectif sont contrôlées au moyen dudit au moins un critère de contrôle pour savoir quelles métadonnées coïncident avec des ontologies prédéfinies qui sont à la base de l'organisation de mémoire interne des archives.

13. Dispositif d'interrogation selon la revendication 12, **caractérisé en ce que** la composante de sélection est réalisée de telle sorte qu'elle détermine pour des documents à interpréter des indices pour la pertinence et la significativité, et transmet à l'aide des indices des documents pertinents et significatifs à la composante de classification.

14. Dispositif d'interrogation selon la revendication 12 ou 13, **caractérisé en ce que** la composante de classification est réalisée afin de déterminer pour chaque document transmis par la composante de sélection un critère de prédéfinition pour la classification de celui-ci.

15. Dispositif d'interrogation selon la revendication 14, **caractérisé en ce que** la composante de classification présente une unité de traitement qui est reliée à un dispositif d'entrée/sortie (1, 2) et réalisée afin d'extraire, à l'aide de l'utilisateur au moyen d'une intervention de glisser-déplacer, des valeurs de recherche pertinentes des documents à exploiter et de les transmettre sous forme de critère de prédéfinition au module de recherche (31) afin de générer l'ensemble comparatif.

16. Dispositif d'interrogation selon la revendication 14 ou 15, **caractérisé en ce que** la composante de classification présente une unité d'évaluation qui est réalisée pour prélever au moyen d'un procédé statistique des valeurs de recherche significatives sur les documents à interpréter et pour les transmettre sous forme de critère de prédéfinition au module de recherche (31) afin de générer l'ensemble comparatif.

17. Dispositif d'interrogation selon la revendication 14 ou 15, **caractérisé en ce que** la composante de classification présente une unité d'évaluation qui est réalisée pour générer au moyen d'un procédé statistique un profil du document à interpréter, pour le comparer à des profils de documents déjà interprétés et que les documents les plus similaires forment ensemble un ensemble comparatif qui est transmis sous forme de critère de prédéfinition directement au module de spécification (32).

18. Dispositif d'interrogation selon l'une quelconque des revendications 12 à 17, **caractérisé en ce que** les hypothèses significatives pour résoudre le problème de recherche, déterminées par l'intermédiaire du module de spécification (32) et du module de récurrence (33) à l'aide du critère de prédéfinition, sont retransmises au module d'interprétation (5) lorsqu'une condition d'annulation est atteinte, et les métadonnées spécifiques à l'ontologie correspondantes sont proposées au choix à un utilisateur par l'intermédiaire d'une unité d'entrée/sortie (1, 2) ou sont associées automatiquement aux documents.
